# EUROPÄISCHE PATENTANMELDUNG

(11) **EP 3 696 633 A1**
(43) Veröffentlichungstag der Anmeldung: **19.08.2020**
(21) Anmeldenummer: 20156801.1
(22) Anmeldetag: 12.02.2020
(51) Int. Cl.: G05B 19/406

(54) **ARBEITSMASCHINE ZUM DURCHFÜHREN WENIGSTENS EINES ARBEITSVORGANGS**

(30) Priorität: 13.02.2019 DE 102019103643
(71) Anmelder: Telegärtner Elektronik GmbH, 74564 Crailsheim (DE)
(72) Erfinder: Hopf, Thomas, 86739 Ederheim (DE); Kruska, Dirk, 74572 Blaufelden (DE)
(74) Vertreter: Hafner & Kohl PartmbB

(57) **Zusammenfassung**

Arbeitsmaschine (1) zur Durchführung wenigstens eines Arbeitsvorgangs, umfassend:
eine Funktionskomponente (3.1 - 3.n), welche einen ersten Betriebsmodus und einen weiteren Betriebsmodus, aufweist,
eine der Funktionskomponente (3.1 - 3.n) zuordenbare oder zugeordnete Steuereinrichtung (6), welche eingerichtet ist, den ersten oder den wenigstens einen weiteren Betriebsmodus zu aktivieren und den Betrieb der Funktionskomponente (3.1 - 3.n) auf Grundlage des jeweils aktivierten Betriebsmodus zu steuern,
wobei die Steuereinrichtung (6) eingerichtet ist, den weiteren Betriebsmodus in Abhängigkeit des Vorliegens einer eine Freigabe zur Nutzung der wenigstens einen Funktionskomponente (3.1 - 3.n) in dem weiteren Betriebsmodus beschreibenden Freigabeinformation bereitzustellen und/oder zu aktivieren und der Steuerung des Betriebs der Funktionskomponente (3.1 - 3.n) den weiteren Betriebsparametersatz zugrunde zu legen.

## Beschreibung

Die Erfindung betrifft eine Arbeitsmaschine zum Durchführen wenigstens eines Arbeitsvorgangs.

Entsprechende Arbeitsmaschinen zum Durchführen wenigstens eines Arbeitsvorgangs sind aus dem Stand der Technik in einer Vielzahl an unterschiedlichen Ausführungen dem Grunde nach bekannt. Lediglich beispielhaft sei in diesem Zusammenhang auf Baumaschineneinrichtungen, Materialbearbeitungseinrichtungen oder Materialverarbeitungseinrichtungen verwiesen.

Entsprechende Arbeitsmaschinen weisen eine oder mehrere in Betrieb nehmbare Funktionskomponenten auf. Jeweilige Funktionskomponenten weisen typischerweise wenigstens einen Betriebsmodus auf, in welchem diese in Betrieb genommen sind, d. h. wenigstens eine diesen bestimmungsgemäß eigene Funktion auf Grundlage eines bestimmten Betriebsparametersatzes ausführen.

Insbesondere im Hinblick auf sicherheitstechnische Aspekte wäre es sinnvoll, bestimmte Funktionskomponenten einer entsprechenden Arbeitsmaschine einem Nutzer nicht standardmäßig freizugeben. Dies kann z. B. zweckmäßig sein, um zu verhindern, dass ein im Umgang mit entsprechenden Arbeitsmaschinen ungeübter Nutzer bestimmte Funktionskomponenten einer Arbeitsmaschine unsachgemäß bedient.

Jedoch besteht über die vorgenannten sicherheitstechnischen Aspekte hinaus allgemein ein Bedarf nach einer praktikablen Lösung dahin, bestimmte Funktionalitäten einer Arbeitsmaschine bedarfs- und/oder zeitweise freizuschalten, sodass die Arbeitsmaschine bedarfs- und/oder zeitweise in unterschiedlichen Betriebsmodi betreibbar ist.

Der Erfindung liegt die Aufgabe zugrunde, eine demgegenüber verbesserte Arbeitsmaschine zum Anheben und/oder Absenken wenigstens eines Objekts anzugeben.

Die Aufgabe wird durch eine Arbeitsmaschine gemäß Anspruch 1 gelöst. Die hierzu abhängigen Ansprüche betreffen mögliche Ausführungsformen der Arbeitsmaschine.

Die hierin beschriebene Erfindung betrifft, wie eingangs erwähnt, eine Arbeitsmaschine zum Durchführen wenigstens eines Arbeitsvorgangs. Bei der Arbeitsmaschine kann es sich prinzipiell um jedwede Arbeitsmaschine zum Durchführen wenigstens eines Arbeitsvorgangs handeln. Arbeitsvorgänge sind typischerweise Vorgänge, in welchen Arbeiten an wenigstens einem zu bearbeitenden Objekt, z. B. zur Änderung wenigstens eines chemischen und/oder physikalischen und/oder geometrischen Objektparameters, durchgeführt werden.

Die Arbeitsmaschine kann daher konkret beispielsweise als Baumaschineneinrichtung, insbesondere als Erdbau- oder Bodenbearbeitungseinrichtung, oder als Materialbearbeitungseinrichtung, insbesondere als Werkzeugmaschineneinrichtung, oder als Materialverarbeitungseinrichtung ausgebildet sein.

Unter Baumaschineneinrichtungen sind grundsätzlich sämtliche Arbeitsmaschinen zur Be- und/oder Verarbeitung von Baumaterialien bzw. Baustoffen verstehen. Entsprechende Baumaschineneinrichtungen weisen typischerweise wenigstens eine Arbeitskrafterzeugungseinrichtung zur Erzeugung einer auf wenigstens ein antreibbares Arbeitselement der jeweiligen Baumaschineneinrichtung wirkenden Antriebskraft auf. Beispiele für entsprechende Baumaschineneinrichtungen sind Erdbaueinrichtungen, wie z. B. Bagger, Grader, Planierer, etc., Verarbeitungsmaschineneinrichtungen zur Verarbeitung, insbesondere zum Mischen, von Baustoffmaterialien, wie z. B. Betonmischer, Mörtelmischer, etc., Transporteinrichtungen zum Transport von Baustoffmaterialien, wie z. B. Betonpumpen, Mörtelpumpen, etc., Rammeinrichtungen oder Druckl uftham merei nrichtungen.

Unter Materialbearbeitungseinrichtungen sind grundsätzlich sämtliche Arbeitsmaschinen zur chemischen und/oder physikalischen Bearbeitung von Materialien bzw. Materialstrukturen zu verstehen. Entsprechende Materialbearbeitungseinrichtungen weisen typischerweise wenigstens eine Arbeitskrafterzeugungseinrichtung zur Erzeugung einer auf wenigstens ein antreibbares Arbeitselement, d. h. insbesondere ein Materialbearbeitungselement, wie z. B. ein Werkzeug, der jeweiligen Materialbearbeitungseinrichtung wirkenden Antriebskraft auf. Beispiele für entsprechende Materialbearbeitungseinrichtungen sind Fügeeinrichtungen zum Fügen eines oder mehrerer Materialien bzw. Materialstrukturen, wie z. B. als Schweißeinrichtungen, Trenneinrichtungen zum Trennen eines oder mehrerer Materialien, wie z. B. Schneideinrichtungen, Spanbearbeitungseinrichtungen zum spanenden Bearbeiten eines oder mehrerer Materialien bzw. Materialstrukturen.

Unter Materialverarbeitungseinrichtungen sind grundsätzlich sämtliche Arbeitsmaschinen zur chemischen und/oder physikalischen Verarbeitung von Materialien zu verstehen. Entsprechende Materialverarbeitungseinrichtungen weisen typischerweise wenigstens eine Arbeitskrafterzeugungseinrichtung zur Erzeugung einer auf wenigstens ein antreibbares Arbeitselement, d. h. insbesondere ein Materialverarbeitungselement, wie z. B. ein Werkzeug, der jeweiligen Materialverarbeitungseinrichtung wirkenden Antriebskraft auf. Beispiele für entsprechende Materialverarbeitungseinrichtungen sind Aufbereitungseinrichtungen zum Aufbereiten eines oder mehrerer Materialien, Mischeinrichtungen zum Mischen eines oder mehrerer Materialien.

Aus vorstehenden genannten Beispielen ergibt sich, dass die Arbeitsmaschine typischerweise wenigstens eine Arbeitskrafterzeugungseinrichtung zur Erzeugung einer auf wenigstens ein antreibbares Arbeitselement der Arbeitsmaschine wirkenden Antriebskraft umfasst. Eine entsprechende Arbeitskrafterzeugungseinrichtung kann als ein motorisches Antriebsaggregat ausgebildet sein oder wenigstens ein solches umfassen.

Die Arbeitsmaschine kann grundsätzlich mobil oder immobil ausgeführt sein. Eine mobile Ausführung der Arbeitsmaschine ermöglicht eine Bewegung der (gesamten) Arbeitsmaschine relativ zu einem Untergrund, insbesondere entlang eines Untergrunds. Die Arbeitsmaschine ist in der mobilen Ausführung sonach jedenfalls unmittelbar oder mittelbar relativ zu einem Untergrund, insbesondere entlang eines Untergrunds, bewegbar. Eine mobil ausgeführte Arbeitsmaschine ist daher typischerweise nicht fest mit einem Untergrund verbunden und sonach relativ zu dem Untergrund bewegbar. Eine mobil ausgeführte Arbeitsmaschine kann wenigstens einen Fahrzeugaufbau umfassen, welcher eine entsprechende Bewegung der Arbeitsmaschine relativ zu einem Untergrund ermöglicht. Ein entsprechender Fahrzeugaufbau umfasst typischerweise wenigstens ein einen Bestandteil einer zur Erzeugung einer ein den Fahrzeugaufbau in eine Bewegung relativ zu einem Untergrund, insbesondere entlang eines Untergrunds, versetzenden Antriebskraft eingerichteten Antriebskrafterzeugungseinrichtung bildendes Antriebsaggregat, d. h. z. B. einen Antriebsmotor.

Ein entsprechender Fahrzeugaufbau kann einen Bestandteil der Arbeitsmaschine bilden; die Arbeitsmaschine kann sonach einen entsprechenden Fahrzeugaufbau umfassen. Gleichermaßen ist es jedoch auch denkbar, dass die Arbeitsmaschine, insbesondere (beschädigungs- bzw. zerstörungsfrei bzw. bedarfsweise) an einem zu der Arbeitsmaschine separaten Fahrzeug, wie z. B. einem Lastkraftwagen, einem Lastschiff, etc., zugehörigen Fahrzeugaufbau befestigbar bzw. befestigt ist.

Eine immobile (stationäre) Ausführung der Arbeitsmaschine ermöglicht keine Bewegung der (gesamten) Arbeitsmaschine relativ zu einem Untergrund, insbesondere entlang eines Untergrunds. Eine immobil ausgeführte Arbeitsmaschine ist daher typischerweise fest mit einem Untergrund verbunden und sonach nicht relativ zu dem Untergrund bewegbar. Die Arbeitsmaschine ist in der immobilen Ausführung sonach weder unmittelbar noch mittelbar relativ zu einem Untergrund, insbesondere entlang eines Untergrunds, bewegbar.

Die hierin beschriebene Arbeitsmaschine ist in allen Ausführungen typischerweise nicht in einem Bauwerk verbaut, d. h. nicht fest mit einem Bauwerk verbunden. Die Arbeitsmaschine stellt sonach keinen, typischerweise untrennbar, mit einer Bauwerkskonstruktion verbundenen Bestandteil eines Bauwerks dar. Bei der Arbeitsmaschine handelt es sich demnach nicht um eine z. B. als Personen- oder Lastenaufzug, Fahrsteig oder Rolltreppe ausgebildete Beförderungseinrichtung zur Beförderung von Personen und/oder Lasten.

Die Arbeitsmaschine weist typischerweise eine oder mehrere Funktionskomponenten auf. Jede Funktionskomponente übernimmt in ihrem Betrieb bzw. im Betrieb der Arbeitsmaschine eine bestimmte Funktion und weist somit eine bestimmte Funktionalität auf. Jede Funktionskomponente ist (beschädigungs- bzw. zerstörungsfrei) lösbarer oder unlösbarer Bestandteil der Arbeitsmaschine; mit anderen Worten ist jede Funktionskomponente unmittelbar oder mittelbar, d. h. unter Zwischenschaltung wenigstens einer weiteren Funktionskomponente, an einer arbeitsmaschinenseitigen Grundstruktur angebunden. Jede Funktionskomponente kann sonach grundsätzlich auch als Arbeitsmaschinenkomponente bezeichnet bzw. erachtet werden.

Konkretes Beispiel einer entsprechenden Funktionskomponente der Arbeitsmaschine ist die erwähnte Arbeitskrafterzeugungseinrichtung zur Erzeugung einer auf wenigstens ein antreibbares Arbeitselement wirkenden Antriebskraft. Weitere Beispiele für entsprechende Funktionskomponenten der Arbeitsmaschine werden weiter unten genannt.

Unabhängig von ihrer konkreten Ausgestaltung weist wenigstens eine Funktionskomponente der Arbeitsmaschine wenigstens zwei unterschiedliche Betriebsmodi bzw. allgemein Modi auf, in welchen diese betrieben werden kann. Wenigstens eine Funktionskomponente der Arbeitsmaschine ist sonach in wenigstens zwei unterschiedlichen Betriebsmodi betreibbar.

Der Betrieb der wenigstens einen Funktionskomponente kann in einem ersten Betriebsmodus (erster Modus) eingeschränkt oder (vollständig) gesperrt sein. Ist der Betrieb der wenigstens einen Funktionskomponente in dem ersten Betriebsmodus eingeschränkt, ist dem Betrieb der wenigstens einen Funktionskomponente ein wenigstens einen ersten Betriebsparameter umfassender erster Betriebsparametersatz zugrunde gelegt; die wenigstens eine Funktionskomponente kann in diesem ersten Betriebsmodus grundsätzlich in Betrieb genommen werden. Der Betrieb der wenigstens einen Funktionskomponente auf Grundlage des ersten Betriebsparametersatzes ermöglicht sonach jedenfalls eine Inbetriebnahme und einen Betrieb der wenigstens einen Funktionskomponente. In dem ersten Betriebsmodus ist der Funktions- bzw. Leistungsumfang der wenigstens einen Funktionskomponente, welcher wiederum von der konkreten Ausgestaltung der wenigstens einen Funktionskomponente abhängt, jedoch (im Vergleich zu wenigstens einem weiteren Betriebsmodus der wenigstens einen Funktionskomponente) beschränkt. Der erste Betriebsmodus zeichnet sich sonach dadurch aus, dass der Funktions- bzw. Leistungsumfang der wenigstens einen Funktionskomponente im Hinblick auf deren vollen Funktions- bzw. Leistungsumfang wenigstens beschränkt ist. Der volle Funktions- bzw. Leistungsumfang der wenigstens einen Funktionskomponente steht daher in dem ersten Betriebsmodus nicht zur Verfügung. Ist der Betrieb der wenigstens einen Funktionskomponente in dem ersten Betriebsmodus (vollständig) gesperrt, kann die wenigstens eine Funktionskomponente nicht in Betrieb genommen werden. Dies kann z. B. durch eine teilweise Abtrennung ("Standby") oder eine vollständige Abtrennung der wenigstens einen Funktionskomponente von einer dieser zugehörigen Energieversorgungseinrichtung realisiert sein.

Ist der Betrieb der wenigstens einen Funktionskomponente in dem ersten Betriebsmodus gesperrt, kann der Betrieb der wenigstens einen Funktionskomponente in einem zweiten bzw. weiteren Betriebsmodus (weiterer Modus) nicht (mehr) gesperrt sein; die wenigstens eine Funktionskomponente kann also in dem weiteren Betriebsmodus in Betrieb genommen werden. Dem Betrieb der wenigstens einen Funktionskomponente in diesem weiteren Betriebsmodus ist ein wenigstens einen (weiteren) Betriebsparameter umfassender (weiterer) Betriebsparametersatz zugrunde gelegt. Der Betrieb der wenigstens einen Funktionskomponente auf Grundlage des (weiteren) Betriebsparametersatzes ermöglicht jedenfalls eine Inbetriebnahme und einen Betrieb der wenigstens einen Funktionskomponente. In diesem weiteren Betriebsmodus kann der Funktions- bzw. Leistungsumfang der wenigstens einen Funktionskomponente, welcher, wie erwähnt, von der konkreten Ausgestaltung der wenigstens einen Funktionskomponente abhängt, beschränkt sein, d. h. die wenigstens eine Funktionskomponente kann in diesem weiteren Betriebsmodus nicht mit ihrem vollen Funktions- bzw. Leistungsumfang betrieben werden. Denkbar ist es jedoch auch, dass der Funktions- bzw. Leistungsumfang der wenigstens einen Funktionskomponente in diesem weiteren Betriebsmodus nicht beschränkt ist, d. h. die wenigstens eine Funktionskomponente kann in diesem weiteren Betriebsmodus mit ihrem vollen Funktions- bzw. Leistungsumfang betrieben werden.

Ist der Betrieb der wenigstens einen Funktionskomponente in dem ersten Betriebsmodus nicht gesperrt, d. h. ist dem Betrieb der wenigstens einen Funktionskomponente in dem ersten Betriebsmodus ein wenigstens einen ersten Betriebsparameter umfassender erster Betriebsparametersatz zugrunde gelegt, ist dem Betrieb der wenigstens einen Funktionskomponente in dem zweiten bzw. weiteren Betriebsmodus ein wenigstens einen von dem ersten Betriebsparameter unterschiedlichen weiteren Betriebsparameter umfassender weiterer Betriebsparametersatz zugrunde gelegt. In diesem weiteren Betriebsmodus ist der Funktions- bzw. Leistungsumfang der wenigstens einen Funktionskomponente im Vergleich zu dem ersten Betriebsmodus weniger beschränkt oder - im Sinne einer vollständigen Aufhebung der Beschränkung des Funktions- bzw. Leistungsumfangs - nicht mehr beschränkt. Der weitere Betriebsmodus zeichnet sich sonach jedenfalls dadurch aus, dass der Funktions- bzw. Leistungsumfang der wenigstens einen Funktionskomponente im Hinblick auf deren vollen Funktions- bzw. Leistungsumfang im Vergleich zu dem ersten Betriebsmodus weniger beschränkt und somit erweitert ist. Der weitere Betriebsmodus ermöglicht daher einen Betrieb der wenigstens einen Funktionskomponente mit einem im Vergleich zu dem ersten Betriebsmodus erweiterten Funktions- und/oder Leistungsumfang.

Der wenigstens einen in den jeweiligen Betriebsmodi betreibbaren Funktionskomponente ist typischerweise eine arbeitsmaschinenseitige, gegebenenfalls zentrale, hardware- und/oder softwaremäßig implementierte Steuereinrichtung zuordenbar bzw. zugeordnet. Die Steuereinrichtung ist zur Bereitstellung und/oder zur Aktivierung des ersten oder des wenigstens einen weiteren Betriebsmodus und zur Steuerung des Betriebs der jeweiligen Funktionskomponente(n) auf Grundlage des jeweils bereitgestellten bzw. aktivierten Betriebsmodus eingerichtet. Zur Bereitstellung und/oder Aktivierung eines Betriebsmodus und zur Steuerung des Betriebs der wenigstens einen Funktionskomponente auf Grundlage des jeweils bereitgestellten bzw. aktivierten Betriebsmodus kann die Steuereinrichtung geeignete Steuerinformationen erzeugen und, z. B. über eine arbeitsmaschinenseitige Kommunikationsstruktur, d. h. z. B. eine Bus- oder Netzwerkstruktur, an die jeweilige Funktionskomponente, d. h. insbesondere ein der jeweiligen Funktionskomponente zugehöriges Steuergerät, übertragen.

Wesentlich an der Arbeitsmaschine ist, dass die Steuereinrichtung eingerichtet ist, den wenigstens einen weiteren Betriebsmodus der wenigstens einen Funktionskomponente (nur) in Abhängigkeit des Vorliegens einer eine Freigabe zur Nutzung der wenigstens einen Funktionskomponente in dem wenigstens einen weiteren Betriebsmodus beschreibenden Freigabeinformation bereitzustellen bzw. zu aktivieren und dem Betrieb der wenigstens einen Funktionskomponente zugrunde zu legen. Mit anderen Worten ist die Steuereinrichtung eingerichtet, den wenigstens einen weiteren Betriebsparametersatz dem Betrieb der wenigstens einen Funktionskomponente in Abhängigkeit des Vorliegens einer entsprechenden Freigabeinformation und somit in Abhängigkeit eines durch die Freigabeinformation abgebildeten Freigabevorgangs zugrunde zu legen. Eine Freigabeinformation beschreibt, wie erwähnt, eine Freigabe zur Nutzung der wenigstens einen Funktionskomponente in dem wenigstens einen weiteren Betriebsmodus.

Die Steuereinrichtung ist sonach eingerichtet, dem Betrieb der wenigstens einen Funktionskomponente den wenigstens einen weiteren Betriebsparametersatz in Abhängigkeit einer durch die Freigabeinformation beschriebenen Freigabe zugrunde zu legen. Es ist also möglich, in Abhängigkeit des Vorliegens einer entsprechenden Freigabeinformation bedarfsweise ("on demand") den Funktions- und Leistungsumfang der wenigstens einen Funktionskomponente - wie sich aus den im Weiteren erläuterten Beispielen ergibt, kann z. B. die Leistungsaufnahme bzw. Leistung einer Arbeitskrafterzeugungseinrichtung als Beispiel für eine entsprechende Funktionskomponente bedarfsweise erweitert werden - zu erweitern bzw. zu verändern.

Der Erzeugung einer Freigabeinformation kann wenigstens ein aktiver nutzerseitiger, d. h. nutzerseitig abgeschlossener bzw. vorgenommener, Freigabevorgang zugrunde liegen. Mithin kann eine Freigabeinformation abhängig eines aktiven nutzerseitigen Freigabevorgangs erzeugt werden. Die Erzeugung einer Freigabeinformation ist hier typischerweise an wenigstens eine aktive Handlung eines Nutzers geknüpft. Denkbar ist es jedoch auch, dass der Erzeugung einer Freigabeinformation kein aktiver nutzerseitiger Freigabevorgang zugrunde liegt. Mithin kann eine Freigabeinformation auch unabhängig eines aktiven nutzerseitigen Freigabevorgangs erzeugt werden. Die Erzeugung einer Freigabeinformation ist hier typischerweise nicht an eine aktive Handlung eines Nutzers geknüpft.

Ein Freigabevorgang kann sonach auf verschiedene Weise vorgenommen werden.

Für den Fall des Erfordernisses einer aktiven Handlung eines Nutzers zur Erzeugung einer Freigabeinformation kann ein Nutzer kann den Freigabevorgang etwa an einem für eine Freigabe nutzerseitig, insbesondere durch eine aktive Betätigungshandlung, d. h. insbesondere ein Bewegen, zu betätigenden Freigabeelement einer der Steuereinrichtung zugeordneten Freigabeeinrichtung vornehmen. Ein entsprechendes, gegebenenfalls in wenigstens einem Bewegungsfreiheitsgrad relativ zu einer Grundstellung bewegbar gelagertes, Freigabeelement bzw. eine entsprechende Freigabeeinrichtung kann außerhalb oder innerhalb der Arbeitsmaschine, d. h. insbesondere außerhalb oder innerhalb einer der Arbeitsmaschine etwaig zugehörigen offenen oder geschlossenen Kabine, d. h. z. B. einer Führerkabine einer als Bagger ausgebildeten Arbeitsmaschine, für einen Nutzer der Arbeitsmaschine, vorgesehen sein.

Denkbar ist es jedoch auch, dass Freigabevorgänge über geeignet konfigurierte Software erfolgen können. Mithin kann eine Freigabeeinrichtung (rein) softwaremäßig implementiert sein. Eine entsprechende Freigabeeinrichtung kann softwaremäßig implementiert z. B., gegebenenfalls als eigenes Nutzersubmenü, in eine der Steuereinrichtung zuordenbare bzw. zugeordnete Nutzerschnittstelleneinrichtung, wie z. B. eine Multimediaeinrichtung, integriert sein. Eine entsprechende Freigabeeinrichtung kann alternativ oder ergänzend z. B. auch als Programm ("App") in einem nutzerseitigen (portablen) Endgerät, z. B. einem Notebook, einem Tablet, einem Handy, einem Smartphone, einer Smartbrille, etc. implementiert sein, welches mit der Steuereinrichtung kommuniziert. Ebenso kann eine entsprechende Freigabeeinrichtung als Netzwerkanwendung, z. B. in einer Internetseite, implementiert sein, welches mit der Steuereinrichtung kommuniziert.

Für den Fall des Erfordernisses keiner aktiven Handlung eines Nutzers zur Erzeugung einer Freigabeinformation kann die Erzeugung einer Freigabeinformation auf Grundlage, insbesondere automatisierbar bzw. automatisch, erfasster Nutzereigenschaften bzw. eines bestimmten Nutzer- bzw. Nutzungsverhaltens erfolgen. Eine Freigabeinformation kann insofern bestimmte Nutzereigenschaften und/oder ein bestimmtes Nutzer- bzw. Nutzungsverhalten berücksichtigen bzw. auf Grundlage bestimmter Nutzereigenschaften und/oder eines bestimmten Nutzer- bzw. Nutzungsverhaltens erzeugt werden. Nutzereigenschaften und/oder ein bestimmtes Nutzer- bzw. Nutzungsverhalten können über wenigstens eine geeignete der Steuereinrichtung zuordenbare oder zugeordnete Eingabe- oder Erfassungseinrichtung erfasst werden. Ein entsprechendes Nutzer- bzw. Nutzungsverhalten kann durch ein weiter unten näher erläutertes Nutzerkriterium abgebildet werden.

Eine entsprechende Eingabe- oder Erfassungseinrichtung kann - analog der Freigabeeinrichtung - beispielsweise, z. B. in Form einer akustischen, optischen, oder haptischen Erfassungssensorik - außerhalb oder innerhalb der Arbeitsmaschine implementiert sein. Ebenso ist es möglich, dass eine entsprechende Eingabe- oder Erfassungseinrichtung in einem nutzerseitigen (portablen) Endgerät, d. h. z. B. einem Notebook, einem Tablet, einem Handy, einem Smartphone, einer Smartbrille, etc., implementiert sein, welches mit der Steuereinrichtung kommuniziert, implementiert ist. Ebenso kann eine entsprechende Eingabe- oder Erfassungseinrichtung als Netzwerkanwendung, z. B. in einer Internetseite, implementiert sein, welche mit der Steuereinrichtung kommuniziert.

Die beschriebene Arbeitsmaschine schafft eine praktikable Möglichkeit, bestimmte Funktionalitäten der Arbeitsmaschine bedarfs- und/oder zeitweise freizuschalten, sodass die Arbeitsmaschine bedarfs- und/oder zeitweise in unterschiedlichen Betriebsmodi betreibbar ist. Die beschriebene Arbeitsmaschine stellt sonach eine praktikable Lösung dar, bestimmte Funktionalitäten einer Arbeitsmaschine bedarfs- und/oder zeitweise freizuschalten, sodass die Arbeitsmaschine bedarfs- und/oder zeitweise in unterschiedlichen Betriebsmodi betreibbar ist.

Die Steuereinrichtung kann eingerichtet sein, den Betrieb der wenigstens einen Funktionskomponente auf Grundlage des wenigstens einen weiteren Betriebsmodus nach dessen Bereitstellung in Abhängigkeit des Vorliegens einer wenigstens eine nutzerseitige Aktivierung des bereitgestellten weiteren Betriebsmodus beschreibenden Aktivierungsinformation zu steuern. Der wenigstens eine weitere Betriebsmodus einer jeweiligen Funktionskomponente kann sonach zunächst (nur) grundsätzlich bereitgestellt werden. Die tatsächliche Aktivierung bzw. Nutzung des erweiterten Funktions- bzw. Leistungsumfangs der jeweiligen Funktionskomponente kann sonach an eine durch eine entsprechende Aktivierungsinformation beschriebene nutzerseitige Aktivierung geknüpft sein. Eine nutzerseitige Aktivierung kann z. B. durch wenigstens eine nutzerseitige Aktivierungshandlung, wie z. B. die nutzerseitige Betätigung eines, z. B. arbeitsmaschinenseitigen, Aktivierungselements und/oder die nutzerseitige Gabe eines Aktivierungsbefehls, d. h. z. B. eines Sprachbefehls, erfolgen. Eine entsprechende nutzerseitige Aktivierungshandlung kann auch über ein nutzerseitiges (portables) Endgerät gegeben und über eine geeignete, insbesondere drahtlose, Kommunikationsverbindung an die Steuereinrichtung kommuniziert werden.

Es ist grundsätzlich denkbar, dass mehrere weitere Betriebsmodus bzw. Modi vorgesehen sind. In diesem Fall kann ein erster weiterer Betriebsmodus (zweiter Betriebsmodus) einen Betrieb der wenigstens einen Funktionskomponente mit einem im Vergleich zu dem ersten Betriebsmodus erweiterten Funktions- und/oder Leistungsumfang der wenigstens einen Funktionskomponente ermöglichen. Ein zweiter weiterer Betriebsmodus (dritter Betriebsmodus) kann einen Betrieb der wenigstens einen Funktionskomponente mit einem im Vergleich zu dem diesem (unmittelbar) vorangehenden weiteren Betriebsmodus (zweiten Betriebsmodus) erweiterten Funktions- und/oder Leistungsumfang der wenigstens einen Funktionskomponente ermöglichen. Dieses Prinzip kann beliebig fortgesetzt werden. Die Aktivierung eines jeweiligen weiteren Betriebsmodus ist typischerweise mit dem Vorliegen einer entsprechenden Freigabeinformation verknüpft.

Im Weiteren werden in beispielhafter und damit nicht abschließender Weise Beispiele für entsprechende Funktionskomponenten der Arbeitsmaschine gegeben:
Eine Funktionskomponente kann ein einen Bestandteil einer zur Erzeugung einer auf ein Arbeitselement, d. h. z. B. ein Werkzeugelement, wirkenden Arbeitskraft eingerichteten arbeitsmaschinenseitigen Arbeitskrafterzeugungseinrichtung bildendes Antriebsaggregat sein oder ein solches umfassen. Ein entsprechendes Antriebsaggregat kann z. B. ein elektrischer oder hydraulischer oder sonstiger motorischer Antrieb bzw. eine entsprechende Energiequelle sein. Ein Antriebsaggregat kann sonach wenigstens einen Antriebsmotor umfassen. Ein Betriebsparameter kann jedweder den Betrieb, insbesondere die Leistung und/oder den Energieverbrauch, des Antriebsaggregats beeinflussender Parameter sein. Beispielsweise kann das Antriebsaggregat in dem ersten Betriebsmodus mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren weiteren Energieverbrauch betrieben werden. Konkret kann dies z. B. bedeuten, dass eine Bewegung eines Arbeitselements entlang eines Arbeitswegs in dem weiteren Betriebsmodus, d. h. z. B. aufgrund einer im Vergleich höheren zweiten Leistung(saufnahme) des Antriebsaggregats, schneller erfolgen kann als in dem ersten Betriebsmodus. Der Betrieb eines Antriebsaggregats mit unterschiedlichen Leistungsaufnahmen bzw. Energieverbräuchen in den jeweiligen Betriebsmodi kann z. B. durch gezielte Veränderung des Arbeitspunkts bzw. der Kennlinie des Antriebsaggregats realisiert werden.

Eine Funktionskomponente kann auch ein einen Bestandteil einer arbeitsmaschinenseitigen zur Erzeugung einer einen der Arbeitsmaschine zugehörigen Fahrzeugaufbau in eine Bewegung relativ zu einem Untergrund, insbesondere entlang eines Untergrunds, versetzenden Antriebskraft eingerichteten Antriebskrafterzeugungseinrichtung bildendes Antriebsaggregat sein oder ein solches umfassen. Ein entsprechendes Antriebsaggregat kann z. B. ein elektrischer oder hydraulischer oder sonstiger motorischer Antrieb sein. Ein Antriebsaggregat kann sonach wenigstens einen Antriebsmotor umfassen. Ein Betriebsparameter kann jedweder den Betrieb, insbesondere die Leistung und/oder den Energieverbrauch, des Antriebsaggregats beeinflussender Parameter sein. Beispielsweise kann das Antriebsaggregat in dem ersten Betriebsmodus mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren weiteren Energieverbrauch betrieben werden. Konkret kann dies z. B. bedeuten, dass eine Bewegung der (gesamten) Arbeitsmaschine entlang eines Untergrunds in dem weiteren Betriebsmodus, d. h. z. B. aufgrund einer im Vergleich höheren zweiten Leistung(saufnahme) des Antriebsaggregats, schneller erfolgen kann als in dem ersten Betriebsmodus. Der Betrieb eines Antriebsaggregats mit unterschiedlichen Leistungsaufnahmen bzw. Energieverbräuchen in den jeweiligen Betriebsmodi kann z. B. durch gezielte Veränderung des Arbeitspunkts bzw. der Kennlinie des Antriebsaggregats realisiert werden.

Eine Funktionskomponente kann auch eine Steuereinrichtung zur Steuerung der Bewegung wenigstens eines Arbeitselements entlang wenigstens eines Arbeitswegs, insbesondere zur Steuerung von Unterbrechungen einer Arbeitsbewegung des Arbeitselements, insbesondere durch wenigstens einen Zwischenhalt, zwischen einem nutzerseitig vorgebbaren oder vorgegebenen Arbeitsweganfangspunkt und einem nutzerseitig vorgebbaren oder vorgegebenen Arbeitswegendpunkt, sein oder eine solche umfassen. Die Steuereinrichtung kann eingerichtet sein, eine Bewegung des Arbeitselements entlang eines durch einen nutzerseitig vorgebbaren oder vorgegebenen Arbeitsweganfangspunkt und einen nutzerseitig vorgebbaren oder vorgegebenen Arbeitswegendpunkt nutzerseitig vorgebbaren oder vorgegebenen Arbeitsweg in dem ersten Betriebsmodus mit einer ersten Anzahl an Unterbrechungen zu steuern und eine Bewegung des Arbeitselements entlang des Arbeitswegs in einem zweiten Betriebsmodus mit einer anderen, d. h. insbesondere geringeren, Anzahl an Unterbrechungen zu steuern. Für einen beispielhaften Arbeitsweg zwischen einer ersten Arbeitsposition und einer zweiten Arbeitsposition, z. B. relativ zu einem zu bearbeitenden Werkstück, kann das Arbeitselement in dem weiteren Betriebsmodus sonach ohne die Möglichkeit eines Zwischenhalts zwischen der ersten und der zweiten Arbeitsposition werden. Selbstverständlich kann ein Arbeitselement in dem weiteren Betriebsmodus auch ohne Unterbrechungen entlang eines durch einen nutzerseitig vorgebbaren oder vorgegebenen Arbeitsweganfangspunkt und einen nutzerseitig vorgebbaren oder vorgegebenen Arbeitswegendpunkt nutzerseitig vorgebbaren oder vorgegebenen Arbeitsweg bewegt werden. Analoges gilt selbstverständlich für alle anderen Beispiele.

Eine Funktionskomponente kann auch eine zur Sicherung wenigstens eines vermittels der Arbeitsmaschine zu bearbeitenden Objekts relativ zu wenigstens einem arbeitsmaschinenseitigen Arbeitselement, insbesondere an wenigstens einem arbeitsmaschinenseitigen Arbeitselement, eingerichtete Sicherungseinrichtung, welche wenigstens ein zwischen einer Sicherungsposition und einer Nichtsicherungsposition bewegbares Sicherungselement umfasst, sein oder eine solche umfassen. Insbesondere kann die Funktionskomponente eine einer entsprechenden Sicherungseinrichtung zugehörige Steuereinrichtung zur Steuerung von Bewegungen des wenigstens einen Sicherungselements, insbesondere zwischen der Sicherungs- und der Nichtsicherungsposition, sein oder eine solche umfassen. Die Steuereinrichtung kann z. B. eingerichtet sein, dem Betrieb der Sicherungseinrichtung in einem ersten Betriebsmodus einen ersten Betriebsparameter(satz) und in dem weiteren Betriebsmodus einen zweiten Betriebsparameter(satz) zugrunde zu legen. Über einen entsprechenden ersten und zweiten Betriebsparameter(satz) können diverse Betriebsparameter der Sicherungseinrichtung, d. h. z. B. die Bewegungsgeschwindigkeit des Sicherungselements, insbesondere zwischen der Sicherungs- und der Nichtsicherungsposition, die Nichtsicherungszeit des in die Nichtsicherungsposition bewegten Sicherungselements, bevor dieses in die Sicherungsposition bewegt wird, etc., gesteuert werden; mithin ist es z. B. möglich, dass das Sicherungselement in dem ersten Betriebsmodus mit einer ersten Bewegungsgeschwindigkeit und in dem weiteren Betriebsmodus mit einer zweiten, d. h. im Vergleich niedrigeren oder höheren, Bewegungsgeschwindigkeit bewegt wird und/oder das Sicherungselement in dem ersten Betriebsmodus eine erste Nichtsicherungszeit und in dem weiteren Betriebsmodus eine zweite, d. h. z. B. im Vergleich niedrigere, Nichtsicherungszeit, bevor es ausgehend von der Nichtsicherungsposition in die Sicherungsposition bewegt wird, aufweist.

Eine Funktionskomponente kann auch eine einer Zugangsmöglichkeit bzw. - öffnung in eine arbeitsmaschinenseitige Kabine, d. h. z. B. eine Führerkabine, zugeordnete Schließeinrichtung, welche wenigstens ein zwischen einer Offenstellung, in welcher ein Zutritt eines Nutzers in die oder aus der Kabine durch die Zugangsmöglichkeit möglich ist, und einer Schließposition, in welcher kein Zutritt eines Nutzers in die oder aus der Kabine durch die Zugangsmöglichkeit möglich ist, bewegbares, insbesondere türartiges- oder-förmiges, Schließelement (Kabinentür) umfasst, sein oder eine solche umfassen. Insbesondere kann die Funktionskomponente eine einer entsprechenden Schließeinrichtung zugehörige Steuereinrichtung (nicht gezeigt) zur Steuerung von Bewegungen des wenigstens einen Schließelements, insbesondere zwischen der Offen- und der Schließposition, sein oder eine solche umfassen. Die Steuereinrichtung kann z. B. eingerichtet sein, dem Betrieb der Schließeinrichtung in einem ersten Betriebsmodus einen ersten Betriebsparameter(satz) und in dem weiteren Betriebsmodus einen zweiten Betriebsparameter(satz) zugrunde zu legen. Über einen entsprechenden ersten und zweiten Betriebsparameter(satz) können diverse Betriebsparameter der Schließeinrichtung, d. h. z. B. die Bewegungsgeschwindigkeit des Schließelements, insbesondere zwischen der Offen- und der Schließposition, die Öffnungszeit des in die Offenposition bewegten Schließelements, bevor dieses in die Schließposition bewegt wird, etc., gesteuert werden; mithin ist es z. B. möglich, dass das Schließelement in dem ersten Betriebsmodus mit einer ersten Bewegungsgeschwindigkeit und in dem weiteren Betriebsmodus mit einer zweiten, d. h. im Vergleich niedrigeren oder höheren, Bewegungsgeschwindigkeit bewegt wird und/oder das Schließelement in dem ersten Betriebsmodus eine erste Öffnungszeit und in dem weiteren Betriebsmodus eine zweite, d. h. im Vergleich niedrigere oder höhere Öffnungszeit, bevor es ausgehend von der Offenposition in die Schließposition bewegt wird, aufweist.

Eine Funktionskomponente kann auch eine wenigstens einer Aussichtsmöglichkeit bzw. -öffnung, hierbei kann es sich z. B. um ein Sichtfenster handeln, aus einer arbeitsmaschinenseitigen Kabine, d. h. z. B. einer Führerkabine, zugeordnete Schließeinrichtung, welche wenigstens ein zwischen einer Offenstellung, in welcher eine Aussicht aus der Kabine durch die Aussichtsmöglichkeit möglich ist, und einer Schließposition, in welcher keine Aussicht aus der Kabine durch die Aussichtsmöglichkeit möglich ist, bewegbares, insbesondere schieberartiges- oder -förmiges, Schließelement umfasst, sein oder eine solche umfassen. Insbesondere kann die Funktionskomponente eine einer entsprechenden Schließeinrichtung zugehörige Steuereinrichtung zur Steuerung von Bewegungen des wenigstens einen Schließelements, insbesondere zwischen der Offen- und der Schließposition, sein oder eine solche umfassen. Die Steuereinrichtung kann z. B. eingerichtet sein, in dem ersten Betriebsmodus keine Bewegung des Schließelements von der Schließ- in die Offenposition zu ermöglichen - hierunter kann gegebenenfalls auch eine begrenzte Bewegung des Schließelements in Richtung der Offenposition zu verstehen sein, welche noch keine vollständige Aussicht aus der Kabine durch die Aussichtsmöglichkeit bzw. -öffnung zulässt - zu ermöglichen und in dem weiteren Betriebsmodus eine Bewegung des Schließelements von der Schließ- in die Offenposition, welche eine vollständige Aussicht aus der Kabine durch die Aussichtsmöglichkeit bzw. -öffnung zulässt - zu ermöglichen. Auch ist es möglich, dass eine entsprechende Steuereinrichtung eingerichtet ist, dem Betrieb der Schließeinrichtung in einem ersten Betriebsmodus einen ersten Betriebsparameter(satz) und in dem weiteren Betriebsmodus einen zweiten Betriebsparameter(satz) zugrunde zu legen. Über einen entsprechenden ersten und zweiten Betriebsparameter(satz) können diverse Betriebsparameter der Schließeinrichtung, d. h. z. B. die Bewegungsgeschwindigkeit eines Schließelements, insbesondere zwischen der Offen- und der Schließposition, die Öffnungszeit des in die Offenposition bewegten Schließelements, bevor dieses in die Schließposition bewegt wird, etc., gesteuert werden; mithin ist es z. B. möglich, dass ein Schließelement in dem ersten Betriebsmodus mit einer ersten Bewegungsgeschwindigkeit und in dem weiteren Betriebsmodus mit einer zweiten, d. h. im Vergleich niedrigeren oder höheren, Bewegungsgeschwindigkeit bewegt wird und/oder ein Schließelement in dem ersten Betriebsmodus eine erste Öffnungszeit und in dem weiteren Betriebsmodus eine zweite, d. h. im Vergleich z. B. höhere Öffnungszeit, bevor es ausgehend von der Offenposition in die Schließposition bewegt wird, aufweist.

Eine Funktionskomponente kann auch eine zur Ausgabe von Signalen, insbesondere in wenigstens einen Bestandteil einer arbeitsmaschinenseitigen Kabine, d. h. z. B. einer Führerkabine, eingerichtete Signalausgabeeinrichtung, gegebenenfalls als Bestandteil einer arbeitsmaschinenseitigen Multimediaeinrichtung, sein oder eine solche umfassen. Eine entsprechende Signalausgabeeinrichtung kann z. B. eine Audio- und/oder Videoanlage sein. Ein Betriebsparameter kann jedweder den Betrieb, insbesondere den Funktions- und/oder Leistungsumfang, der Signalausgabeeinrichtung beeinflussender Parameter sein. Beispielsweise kann die Signalausgabeeinrichtung in dem ersten Betriebsmodus, sofern die Signalausgabeeinrichtung in diesem überhaupt in Betrieb genommen werden kann, zur Ausgabe von Signalen einer ersten Qualität und/oder zum Empfang von analog empfangbaren Radio- und/oder TV-Sendern und in dem weiteren Betriebsmodus z. B. zur Ausgabe von Signalen einer im Vergleich höheren zweiten Qualität und/oder zum Empfang von digital empfangbaren Radio- und/oder TV-Sendern eingerichtet sein.

Eine Funktionskomponente kann auch eine zur Steuerung der klimatischen Verhältnisse in wenigstens einem Bestandteil einer arbeitsmaschinenseitigen Kabine, d. h. z. B. einer Führerkabine, eingerichtete Klimaeinrichtung sein oder eine solche umfassen. Eine entsprechende Klimaeinrichtung kann z. B. eine Klimatisierungs- oder eine Heizungseinrichtung sein. Ein Betriebsparameter kann jedweder den Betrieb, insbesondere den Funktions- und/oder Leistungsumfang, der Klimaeinrichtung beeinflussender Parameter sein. Beispielsweise kann die Klimaeinrichtung in dem ersten Betriebsmodus, sofern die Klimaeinrichtung in diesem überhaupt in Betrieb genommen werden kann, mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren zweiten Energieverbrauch betrieben werden. Der Betrieb der Klimaeinrichtung mit den unterschiedlichen Leistung(saufnahm)en bzw. Energieverbräuchen in den jeweiligen Betriebsmodi kann z. B. durch gezielte Veränderung des Arbeitspunkts bzw. der Kennlinie der Klimaeinrichtung realisiert werden.

Eine Funktionskomponente kann auch eine zur, insbesondere funkbasierten, Kommunikation mit einem Kommunikationspartner eingerichtete arbeitsmaschinenseitige Kommunikationseinrichtung sein oder eine solche umfassen. Eine entsprechende Kommunikationseinrichtung kann z. B. ein eine Funkverbindung, z. B. eine Bluetooth- oder WLAN-Verbindung, mit einem Kommunikationspartner, d. h. z. B. einem portablen Endgerät, insbesondere einem Tablet-PC, einem Handy, einem Smartphone, einer Smartbrille, etc., ermöglichendes Kommunikationsmodul sein. Ein entsprechendes Kommunikationsmodul kann im Weiteren - z. B. in Form eines Netzwerk-Hubs - eingerichtet sein, eine Kommunikationsverbindung mit einem Kommunikationsnetzwerk, d. h. z. B. einem Intranet oder dem Internet, herzustellen. Ein Betriebsparameter kann jedweder den Betrieb, insbesondere den Funktions- und/oder Leistungsumfang, der Kommunikationseinrichtung beeinflussender Parameter sein. Beispielsweise kann die Kommunikationseinrichtung in dem ersten Betriebsmodus, sofern die Kommunikationseinrichtung in diesem überhaupt in Betrieb genommen werden kann, mit einer ersten Leistung (Funkleistung) bzw. einem ersten Sende- und Empfangsbereich und/oder einem ersten Funkstandard, z. B. einem Bluetooth-Standard, und in dem weiteren Betriebsmodus mit einer im Vergleich höheren Leistung bzw. einem im Vergleich größeren Sende- und Empfangsbereich und/oder einem bestimmten, gegebenenfalls zusätzlichen, Funkstandard, z. B. einem Bluetooth- oder WLAN-Standard, betrieben werden.

Eine Funktionskomponente kann auch eine zur Bereitstellung einer bestimmten Anzahl und/oder Anordnung von Sitzplätzen innerhalb wenigstens eines Teils einer arbeitsmaschinenseitigen Kabine, d. h. z. B. einer Führerkabine, eingerichtete Sitzplatzeinrichtung sein oder eine solche umfassen. Eine solche Sitzplatzeinrichtung kann z. B. eine Sitzbewegungseinrichtung, welche zur Bewegung wenigstens eines Sitzes zwischen einer Nutzstellung, in welcher der Sitz von einem Nutzer als Sitz genutzt werden kann, und einer Verstaustellung, in welcher der Sitz verstaut ist und von einem Nutzer nicht als Sitz genutzt werden kann, sein. Ein Betriebsparameter kann jedweder den Betrieb, insbesondere den Funktions- und/oder Leistungsumfang, der Sitzplatzeinrichtung beeinflussender Parameter sein. Beispielsweise kann die Sitzplatzeinrichtung in dem ersten Betriebsmodus gesperrt sein, d. h. die Bewegung eines Sitzes im Allgemeinen zwischen einer Nutz- und einer Verstaustellung, im Besonderen ausgehend von einer Verstaustellung in eine Nutzstellung, ist nicht möglich, und in dem weiteren Betriebsmodus nicht gesperrt sein, d. h. die Bewegung eines Sitzes zwischen einer Nutz- und einer Verstaustellung ist möglich.

Die Steuereinrichtung kann eingerichtet sein, die Freigabeinformation in Abhängigkeit des Vorliegens wenigstens eines Freigabekriteriums zu erzeugen. Die Erzeugung der Freigabeinformation kann sonach an das Vorliegen eines oder mehrerer Freigabekriterien geknüpft sein. Dabei ist es möglich, dass wenigstens zwei bestimmte Freigabekriterien vorliegen müssen, um eine Freigabeinformation zu erzeugen.

Im Weiteren werden in beispielhafter und damit nicht abschließender Weise Beispiele für entsprechende Freigabekriterien gegeben:
Ein Freigabekriterium kann ein Nutzerkriterium sein, welches wenigstens eine Nutzereigenschaft eines Nutzers der Arbeitsmaschine beschreibt. Mithin kann eine Freigabeinformation z. B. nur erzeugt werden, wenn wenigstens ein Nutzerkriterium erfüllt oder - für das Beispiel des Konsums und/oder Missbrauchs von Rauschmitteln und/oder pharmazeutisch wirksamer Substanzen - nicht erfüllt ist. Ein entsprechendes Nutzerkriterium kann z. B. eine bestimmte Nutzereigenschaft, insbesondere das Alter, das Geschlecht, eine Betriebszugehörigkeit zu einem über die Arbeitsmaschine verfügenden Betrieb, einen Dienstgrad innerhalb eines über die Arbeitsmaschine verfügenden Betriebs, nutzerseitige Erfahrungen im Zusammenhang mit dem Betrieb der Arbeitsmaschine bzw. der in dem wenigstens einen weiteren Betriebsmodus zu betreibenden Funktionskomponente, einen nutzerseitigen Konsum und/oder Missbrauch von Rauschmitteln und/oder pharmazeutisch wirksamer Substanzen, insbesondere cytotoxischer und/oder neurotoxischer Substanzen, sein. Ein Nutzerkriterium kann auch ein Nutzerverhalten sein. Insbesondere kann ein Nutzerkriterium auch ein Nutzerverhalten sein, welches die Abnutzung und den Verschleiß der Arbeitsmaschine bzw. wenigstens einer Funktionskomponente der Arbeitsmaschine beeinflusst bzw. betrifft. Nutzerkriterien können über geeignete Eingabe- oder Erfassungseinrichtungen abgefragt bzw. erfassten. Entsprechende Eingabe- oder Erfassungseinrichtungen können mit geeigneten hardware- und/oder softwaremäßigen Auswerteeinrichtungen zusammenwirken, welche eine Auswertung der eingegebenen und/oder erfassten Nutzereigenschaften im Hinblick auf ein Auswertungskriterium, d. h. z. B. im Hinblick auf ein Plausibilitätskriterium, ermöglichen.

Ein Freigabekriterium kann auch ein Bezahlkriterium sein, welches wenigstens einen Bezahlparameter zur Nutzung des wenigstens einen weiteren Betriebsmodus beschreibt. Mithin kann eine Freigabeinformation z. B. nur erzeugt werden, wenn wenigstens ein Bezahlkriterium erfüllt ist. Ein entsprechendes Bezahlkriterium kann z. B. ein nutzerseitig erfolgter Bezahlvorgang zur Nutzung des wenigstens einen weiteren Betriebsmodus sein. Ein entsprechender Bezahlvorgang kann über eine arbeitsmaschinenseitige Bezahleinrichtung zur Durchführung entsprechender Bezahlvorgänge unmittelbar an der Arbeitsmaschine oder über externe Bezahleinrichtungen zur Durchführung entsprechender Bezahlvorgänge, welche mit der Steuereinrichtung kommunizieren, erfolgen. Der eigentliche Bezahlvorgang ist nicht Bestandteil der hierin beschriebenen Erfindung.

Ein Freigabekriterium kann auch ein Objektkriterium sein, welches wenigstens ein vermittels der Arbeitsmaschine zu bearbeitendes Objekt beschreibt. Mithin kann eine Freigabeinformation z. B. nur erzeugt werden, wenn wenigstens ein Objektkriterium erfüllt oder - für das Beispiel eines Objekts mit z. B. zu großem Gewicht und/oder zu großen Abmessungen - nicht erfüllt ist. Das Objektkriterium kann eine bestimmte chemische und/oder physikalische und/oder geometrische Eigenschaft wenigstens eines vermittels der Arbeitsmaschine zu bearbeitenden Objekts sein. Ein Objektkriterium kann sonach einen chemischen Parameter, wie z. B. die chemische Zusammensetzung, einen physikalischen Parameter, wie z. B. die Dichte, die Maße, die Temperatur, etc. und/oder einen geometrischen Parameter, wie z. B. die Abmessungen, die Form, etc., eines vermittels der Arbeitsmaschine zu bearbeitenden Objekts betreffen. Beispielsweise kann ein Überschreiten einer bestimmten Abmessung, insbesondere außerhalb eines vordefinierten Abmessungsbereichs, eine Aufhebung der Freigabe des weiteren Betriebsmodus bedingen.

Ein Freigabekriterium kann auch ein Bewegungskriterium sein, welches die Bewegung wenigstens einer bewegbaren Funktionskomponente, d. h. z. B. eines Arbeitselements, insbesondere eines Werkzeugelements, der Arbeitsmaschine in wenigstens einem Bewegungsfreiheitsgrad beschreibt. Mithin kann eine Freigabeinformation z. B. nur erzeugt werden, wenn wenigstens ein Bewegungskriterium erfüllt oder - für das Beispiel einer auf eine unsachgemäße Nutzung einer arbeitsmaschinenseitigen Arbeitselements zurückzuführenden Bewegung des Arbeitselements - nicht erfüllt ist. Das Bewegungskriterium kann eine bestimmte Bewegung eines arbeitsmaschinenseitigen Arbeitselements in einem bestimmten Bewegungsfreiheitsgrad und/oder entlang einer bestimmten Bewegungsbahn relativ zu einem Untergrund sein. Ein Bewegungskriterium kann sonach eine Bewegung eines arbeitsmaschinenseitigen Arbeitselements in einem bestimmten Bewegungsfreiheitsgrad und/oder entlang einer bestimmten Bewegungsbahn relativ zu einem Untergrund betreffen. Dies kann insbesondere für das Beispiel einer als Baggereinrichtung ausgebildeten Arbeitsmaschine gelten, deren Schaufel typischerweise um eine vertikale Schwenkachse schwenkbar gelagert ist. Beispielsweise kann eine bestimmte Bewegung einer entsprechenden Schaufel, insbesondere außerhalb eines vordefinierten Bewegungsbereichs, keine Freigabe oder eine Aufhebung der Freigabe des weiteren Betriebsmodus bedingen.

Ein Freigabekriterium kann auch ein Arbeitsvorganganzahlkriterium sein, welches eine Anzahl an Arbeitsvorgängen im Zusammenhang mit dem Bearbeiten wenigstens eines vermittels der Arbeitsmaschine zu bearbeitenden Objekts, insbesondere innerhalb eines bestimmten Zeitraums, beschreibt. Mithin kann eine Freigabeinformation z. B. nur erzeugt werden, wenn wenigstens ein Arbeitsvorganganzahlkriterium erfüllt oder - für das Beispiel einer zu hohen (geplanten) Anzahl an Arbeitsvorgängen, insbesondere innerhalb eines bestimmten Zeitraums - nicht erfüllt ist. Das Arbeitsvorganganzahlkriterium kann eine bestimmte Anzahl an vermittels der Arbeitsmaschine, insbesondere in einem bestimmten Zeitraum, durchzuführenden oder durchgeführten Arbeitsvorgängen sein. Ein Arbeitsvorganganzahlkriterium kann sonach eine Anzahl an in einem bestimmten Zeitraum durchzuführenden oder durchgeführten Arbeitsvorgängen betreffen. Beispielsweise kann eine Überschreitung einer bestimmten Anzahl an Arbeitsvorgängen keine Freigabe oder eine Aufhebung der Freigabe des weiteren Betriebsmodus bedingen.

Ein Freigabekriterium kann auch ein Arbeitskraftkriterium sein, welches eine Arbeitskraft zum Bearbeiten wenigstens eines vermittels der Arbeitsmaschine zu bearbeitenden Objekts beschreibt. Mithin kann eine Freigabeinformation z. B. nur erzeugt werden, wenn wenigstens ein Arbeitskraftkriterium erfüllt oder - für das Beispiel einer zu hohen erforderlichen Arbeitskraft - nicht erfüllt ist. Das Arbeitskraftkriterium kann eine bestimmte zum Bearbeiten wenigstens eines vermittels der Arbeitsmaschine zu bearbeitenden Objekts aufzubringende bzw. aufgebrachte Arbeitskraft sein. Eine Arbeitskraftkriterium kann sonach eine zum Bearbeiten wenigstens eines vermittels der Arbeitsmaschine zu bearbeitenden Objekts aufzubringende bzw. aufgebrachte Arbeitskraft betreffen. Beispielsweise kann sonach das Überschreiten einer bestimmten Arbeitskraft keine Freigabe oder eine Aufhebung der Freigabe des weiteren Betriebsmodus bedingen.

Ein Freigabekriterium kann auch ein Arbeitswegkriterium sein, welches einen bestimmten Arbeitsweg wenigstens einer bewegbaren Funktionskomponente, d. h. z. B. eines Arbeitselements, insbesondere eines Werkzeugelements, der Arbeitsmaschine im Zusammenhang mit dem Bearbeiten wenigstens eines vermittels der Arbeitsmaschine zu bearbeitenden Objekts beschreibt. Mithin kann eine Freigabeinformation z. B. nur erzeugt werden, wenn wenigstens ein Arbeitswegkriterium erfüllt oder - für das Beispiel eines zu langen (geplanten) Arbeitswegs - nicht erfüllt ist. Das Arbeitswegkriterium kann eine bestimmte, insbesondere von einem bestimmten Arbeitsweganfangspunkt und einem bestimmten Arbeitswegendpunkt unabhängige oder abhängige, Arbeitsweglänge sein. Das Arbeitswegkriterium kann sonach eine bestimmte, insbesondere von einem bestimmten Arbeitsweganfangspunkt (hierbei muss es sich nicht zwingend um einen absoluten Anfangspunkt handeln) und einem bestimmten Arbeitswegendpunkt (hierbei muss es sich nicht zwingend um einen absoluten Arbeitswegendpunkt handeln) unabhängige, Arbeitsweglänge, d. h. z. B. je nach Ausführung der Arbeitsmaschine eine Arbeitsweglänge von 10 cm, betreffen. Ein Arbeitswegkriterium kann jedoch auch eine bestimmte, insbesondere von einem bestimmten Arbeitsweganfangspunkt und einem bestimmten Arbeitswegendpunkt abhängige, Arbeitsweglänge zwischen einem, insbesondere nutzerseitig, vorgebbaren bzw. vorgegebenen Arbeitsweganfangspunkt und einem, insbesondere nutzerseitig, vorgebbaren bzw. vorgegebenen Arbeitswegendpunkt, wie z. B. für das Beispiel einer als Bohreinrichtung eingesetzten Arbeitsmaschine ein (bestimmter) Arbeitsweg zwischen einem bestimmten Bohranfangspunkt zu einem bestimmten Bohrendpunkt sein. Beispielsweise kann sonach das Über- oder Unterschreiten eines bestimmten Arbeitswegs keine Freigabe oder eine Aufhebung der Freigabe des Weiteren Betriebsmodus bedingen.

Ein Freigabekriterium kann auch ein Ortskriterium sein, welches wenigstens einen Ortsparameter, insbesondere einen Ort und/oder ein Gebiet um einen Ort, beschreibt, innerhalb welches der Betrieb der Arbeitsmaschine auf Grundlage des wenigstens einen weiteren Betriebsmodus gestattet ist. Mithin kann eine Freigabeinformation z. B. nur erzeugt werden, wenn wenigstens ein Ortskriterium erfüllt oder-für das Beispiel eines Verlassens eines bestimmten Orts bzw. Gebiets - nicht erfüllt ist. Das Ortskriterium kann ein bestimmter Ort und/oder ein bestimmtes Gebiet um einen bestimmten Ort sein. Ein Ort bzw. Gebiet kann ein(e) bestimmte(s) Fläche(nareal) außerhalb und/oder innerhalb eines oder mehrerer, gegebenenfalls zusammengehörender, Gebäudeteile bzw. eines oder mehrerer, gegebenenfalls zusammengehörender, Gebäude sein. Ein Ortskriterium kann sonach einen bestimmten, gegebenenfalls nutzerseitig vorgebbaren bzw.

Arbeitsmaschine in dem ersten und/oder zweiten Betriebsmodus betreibbare ist, betreffen. Beispielsweise kann sonach das Verlassen eines bestimmten Orts bzw. Gebiets keine Freigabe oder eine Aufhebung der Freigabe des weiteren Betriebsmodus bedingen.

Ein Freigabekriterium kann auch ein Zeitkriterium sein, welches wenigstens einen Zeitparameter, insbesondere ein Zeitintervall und/oder wenigstens einen Zeitraum, beschreibt, innerhalb welches der Betrieb der Arbeitsmaschine auf Grundlage des wenigstens einen weiteren Betriebsmodus gestattet ist. Mithin kann eine Freigabeinformation z. B. nur erzeugt werden, wenn wenigstens ein Zeitkriterium erfüllt oder - für das Beispiel einer (geplanten) Nutzung des wenigstens einen weiteren Betriebsmodus zu einer unüblichen Zeit (Nacht, Wochenende, etc.) - nicht erfüllt ist. Das Zeitkriterium kann eine bestimmte, insbesondere von einer Uhrzeit und/oder einem Datum unabhängige, Zeitdauer, d. h. z. B. eine Zeitdauer von 15 Minuten, 1 Stunde, 2 Tage, 3 Monate, 1 Jahr, etc. sein. Ein Zeitkriterium kann jedoch auch ein bestimmter, insbesondere von einer Uhrzeit und/oder einem Datum abhängiger, Zeitraum zwischen einem, insbesondere nutzerseitig, vorgebbaren bzw. vorgegebenen Anfangszeitpunkt und einem, insbesondere nutzerseitig, vorgebbaren bzw. vorgegebenen Endzeitpunkt, d. h. z. B. ein bestimmter Zeitraum innerhalb eines Tages, wie z. B. ein Zeitraum zwischen 8 und 12 Uhr, ein Zeitraum eines oder mehrerer Tage, insbesondere innerhalb einer (bestimmten) Woche, wie z. B. ein Zeitraum von Montag bis Donnerstag oder von Freitag oder Samstag bis Sonntag (Wochenende), ein Zeitraum eines oder mehrerer Monate, insbesondere innerhalb einer (bestimmten) Jahreszeit, wie z. B. ein Zeitraum von April bis Oktober, oder ein Zeitraum eines oder mehrerer Jahre, wie z. B. ein Zeitraum von 2017 bis 2018, sein. Beispielsweise kann sonach das Ablaufen einer bestimmten Zeitdauer oder das Erreichen eines bestimmten Zeitraums keine Freigabe oder eine Aufhebung der Freigabe des weiteren Betriebsmodus bedingen.

Ein Freigabekriterium kann auch ein Klimakriterium sein, welches wenigstens einen Klimaparameter, insbesondere eine Temperatur, eine Luftfeuchtigkeit, einen Niederschlag, beschreibt, innerhalb welches der Betrieb der Arbeitsmaschine auf Grundlage des wenigstens einen weiteren Betriebsmodus gestattet ist. Mithin kann eine Freigabeinformation z. B. nur erzeugt werden, wenn wenigstens ein Klimakriterium erfüllt oder - für das Beispiel einer (geplanten) Nutzung des wenigstens einen weiteren Betriebsmodus bei zu starkem Niederschlag (Regen, Schnee, etc.) - nicht erfüllt ist. Das Klimakriterium kann ein das Klima außerhalb und/oder innerhalb einer arbeitsmaschinenseitigen Kabine, soweit vorhanden, betreffender Klimaparameter, insbesondere eine Feuchtigkeit, ein Druck, eine Temperatur, außerhalb und/oder innerhalb der arbeitsmaschinenseitigen Kabine sein. Das Über- oder Unterschreiten z. B. einer bestimmten Temperatur kann sonach eine Aufhebung des weiteren Betriebsmodus bedingen. Beispielsweise kann sonach ein Unterschreiten einer bestimmten Grenztemperatur keine Freigabe oder eine Aufhebung einer Freigabe des weiteren Betriebsmodus bedingen.

Ein Freigabekriterium kann auch ein Sicherheitskriterium sein, welches wenigstens einen Sicherheitsparameter beschreibt, innerhalb welches der Betrieb der Arbeitsmaschine auf Grundlage des wenigstens einen weiteren Betriebsmodus gestattet ist. Mithin kann eine Freigabeinformation z. B. nur erzeugt werden, wenn wenigstens ein Sicherheitskriterium erfüllt oder-für das Beispiel einer den Nutzer und/oder einen Dritten gefährdenden (geplanten) Nutzung des wenigstens einen weiteren Betriebsmodus - nicht erfüllt ist. Das Sicherheitskriterium kann ein, insbesondere für einen Nutzer der Arbeitsmaschine und/oder einen Dritten, sicherheitsrelevanter Vorgang im Zusammenhang mit Betrieb der Arbeitsmaschine sein. Ein sicherheitsrelevanter, d. h. insbesondere sicherheitsbedenklicher, Vorgang im Zusammenhang mit dem Betrieb der Arbeitsmaschine kann sonach keine Freigabe oder eine Aufhebung der Freigabe des weiteren Betriebsmodus bedingen.

Jeweilige Kriterien können, insbesondere in Abhängigkeit des Vorliegens einer eine Änderung des jeweiligen Kriteriums autorisierenden Autorisierungsinformation, in Abhängigkeit einer autorisierten Bedienereingabe variabel sein bzw. variiert werden. Ein hierfür speziell autorisierter Bediener, d. h. z. B. der Inhaber der Arbeitsmaschine, ein Ausbilder, etc., kann sonach gezielt Einfluss auf die durch das jeweilige Kriterium mitbestimmte Freigabe des Betriebs einer Funktionskomponente in dem wenigstens einen weiteren Betriebsmodus nehmen.

Die Steuereinrichtung kann dazu eingerichtet sein, eine eine Empfehlung einer Freigabe eines weiteren Betriebsmodus im Hinblick auf eine bestimmte Zielgröße beschreibenden Empfehlungsinformation zu erzeugen und, insbesondere über wenigstens eine arbeitsmaschinenseitige Signalausgabeeinrichtung z. B. in Form akustischer, optischer und/oder haptischer Signale, an einen Nutzer auszugeben. Eine Zielgröße kann z. B. eine möglichst effiziente Bewegung eines Arbeitselements zwischen einem, insbesondere nutzerseitig vorgebbaren oder vorgegebenen, Arbeitsweganfangspunkt und einem, insbesondere nutzerseitig vorgebbaren oder vorgegebenen, Arbeitswegendpunkt sein, welche z. B. einen Zwischenhalt an zwischen dem Arbeitsweganfangspunkt und dem Arbeitswegendpunkt liegenden Positionen unterbindet. Für einen beispielhaften Arbeitsweg zwischen einer ersten Arbeitsposition und einer zweiten Arbeitsposition kann eine Empfehlungsinformation sonach z. B. als Empfehlung angeben, einen weiteren Betriebsmodus freizugeben, um Zwischenhalte zwischen der ersten und der zweiten Arbeitsposition unterbinden. Denkbar ist es beispielsweise auch, dass eine Empfehlungsinformation als Empfehlung angibt, einen weiteren Betriebsmodus freizugeben, um einen bestimmten Arbeitsvorgang mit einer höheren Geschwindigkeit und/oder Leistung durchzuführen.

Neben der Arbeitsmaschine betrifft die Erfindung auch ein Verfahren zum Betrieb einer wie beschriebenen Arbeitsmaschine. Die verfahrensgemäß betriebene Arbeitsmaschine umfasst wenigstens eine Funktionskomponente, welche einen ersten Betriebsmodus, in welchem der Betrieb der wenigstens einen Funktionskomponente gesperrt ist oder dem Betrieb der wenigstens einen Funktionskomponente ein wenigstens einen ersten Betriebsparameter umfassender erster Betriebsparametersatz zugrunde gelegt wird, und wenigstens einen weiteren Betriebsmodus, in welchem der Betrieb der wenigstens einen Funktionskomponente nicht gesperrt ist oder dem Betrieb der wenigstens einen Funktionskomponente ein wenigstens einen von dem ersten Betriebsparameter unterschiedlichen weiteren Betriebsparameter umfassender weiterer Betriebsparametersatz zugrunde gelegt wird, aufweist. Der wenigstens einen Funktionskomponente ist wenigstens eine Steuereinrichtung, welche zur Aktivierung des ersten oder des wenigstens einen weiteren Betriebsmodus und zur Steuerung des Betriebs der wenigstens einen Funktionskomponente auf Grundlage des jeweils aktivierten Betriebsmodus eingerichtet ist, zuordenbar oder zugeordnet. Das Verfahren zeichnet sich dadurch aus, dass die Steuereinrichtung den wenigstens einen weiteren Betriebsmodus in Abhängigkeit des Vorliegens einer eine Bereitstellung und/oder Aktivierung des wenigstens einen weiteren Betriebsmodus beschreibenden Freigabeinformation bereitstellt und/oder aktiviert und der Steuerung des Betriebs der wenigstens einen Funktionskomponente den wenigstens einen weiteren Betriebsparametersatz zugrunde legt.

Sämtliche Ausführungen im Zusammenhang mit der Arbeitsmaschine gelten analog für das Verfahren und umgekehrt.

Die Erfindung ist anhand von Ausführungsbeispielen in den Zeichnungsfiguren näher erläutert. Dabei zeigen:
- Fig. 1: eine rein schematische Prinzipdarstellung einer Arbeitsmaschine gemäß einem Ausführungsbeispiel; und
- Fig. 2 - 7: je eine Prinzipdarstellung einer Arbeitsmaschine gemäß einem Ausführungsbeispiel.

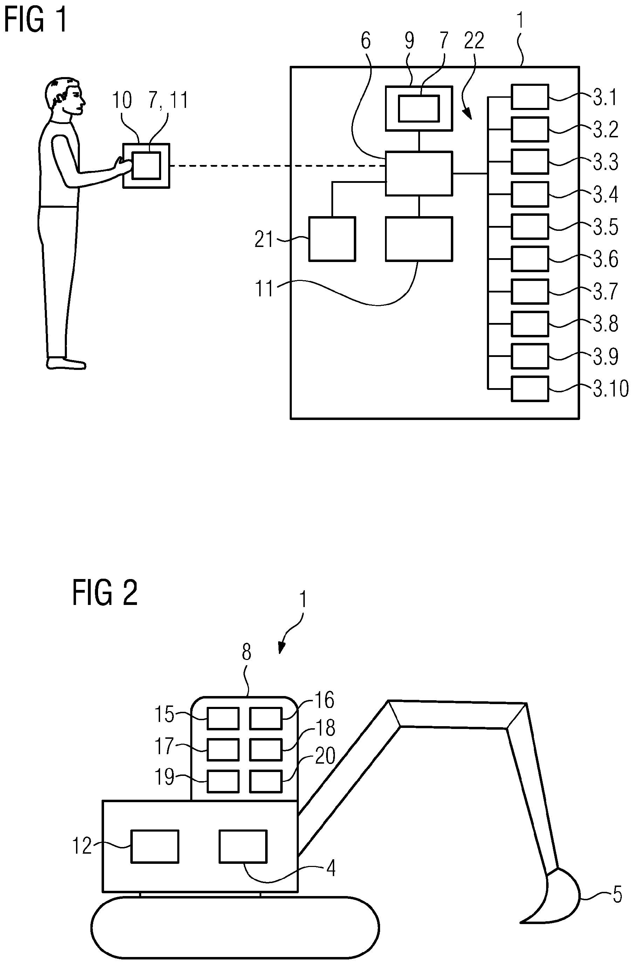

Fig. 1 zeigt eine rein schematische Prinzipdarstellung einer Arbeitsmaschine 1 gemäß einem Ausführungsbeispiel. Die Arbeitsmaschine 1 ist zum Durchführen wenigstens eines Arbeitsvorgangs eingerichtet. Arbeitsvorgänge sind typischerweise Vorgänge, in welchen Arbeiten an wenigstens einem zu bearbeitenden Objekt 2, z. B. zur Änderung wenigstens eines chemischen und/oder physikalischen und/oder geometrischen Objektparameters, durchgeführt werden.

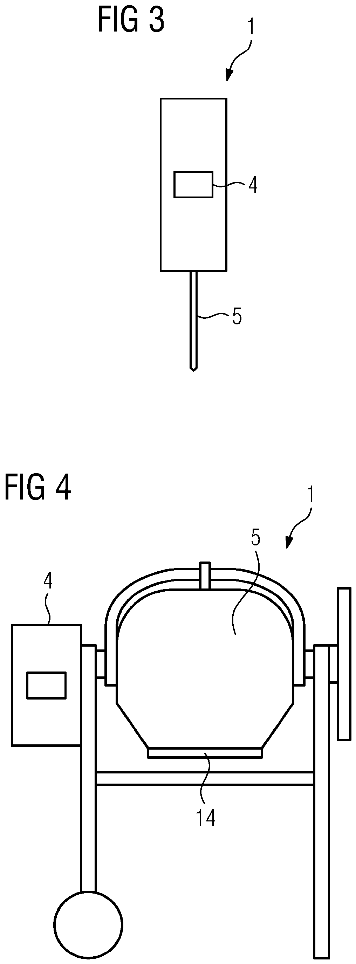

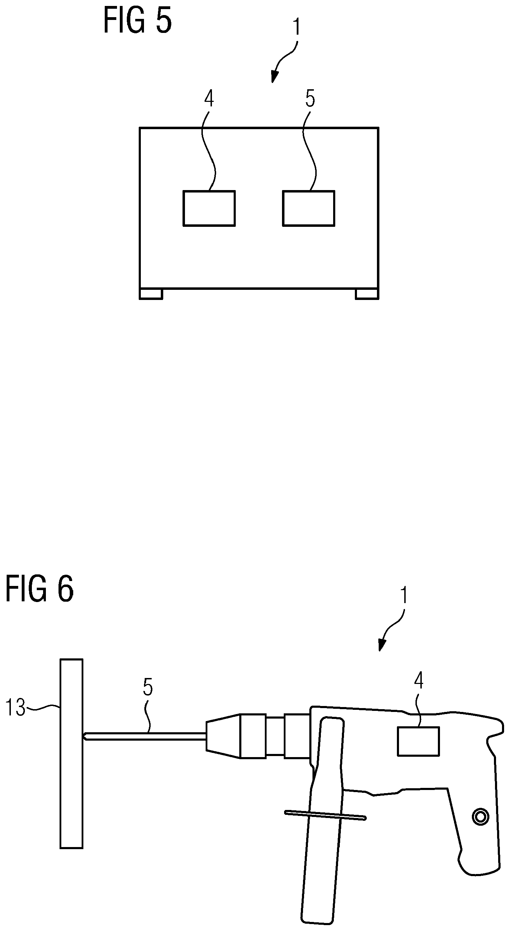

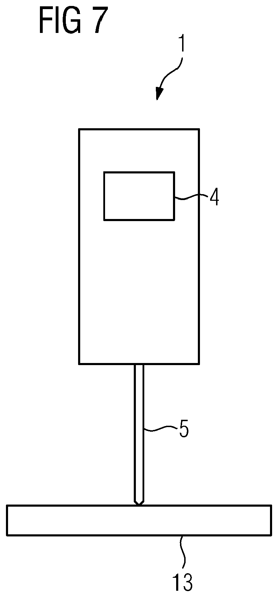

Wie anhand der in den Fig. 2 - 7 gezeigten Ausführungsbeispiele ersichtlich ist, kann die Arbeitsmaschine 1 daher z. B. konkret als Baumaschineneinrichtung, d. h. als Erdbau- oder Bodenbearbeitungseinrichtung, nämlich z. B. als Baggereinrichtung (Fig. 2) oder als Drucklufthammereinrichtung (Fig. 3), oder als Materialverarbeitungseinrichtung, d. h. als Materialmischeinrichtung, nämlich z. B. als Baumaterialmischeinrichtung (Fig. 4), oder als Materialtransporteinrichtung, d. h. als Materialpumpeinrichtung, nämlich z. B. als Baumaterialpumpeinrichtung (Fig. 5), oder als Materialbearbeitungseinrichtung, d. h. als Werkzeugmaschineneinrichtung, nämlich z. B. als Bohreinrichtung (Fig. 6) oder als Schweißeinrichtung (Fig. 7), ausgebildet sein. Weitere Ausführungsbeispiele sind denkbar.

Die Arbeitsmaschine 1 umfasst in allen Ausführungsbeispielen typischerweise eine Arbeitskrafterzeugungseinrichtung 4 zur Erzeugung einer auf wenigstens ein antreibbares Arbeitselement 5 der Arbeitsmaschine 1 wirkenden Antriebskraft umfasst. Eine entsprechende Arbeitskrafterzeugungseinrichtung 4 kann als ein motorisches Antriebsaggregat ausgebildet sein oder wenigstens ein solches umfassen.

Anhand der Ausführungsbeispiele ist ersichtlich, dass die Arbeitsmaschine 1 grundsätzlich mobil oder immobil ausgeführt sein kann. Eine mobile Ausführung der Arbeitsmaschine 1, wie z. B. in den Ausführungsbeispielen gemäß Fig. 2, 4 gezeigt, ermöglicht eine Bewegung der (gesamten) Arbeitsmaschine 1 relativ zu einem Untergrund, insbesondere entlang eines Untergrunds. Eine immobile (stationäre) Ausführung der Arbeitsmaschine 1, wie z. B. in dem Ausführungsbeispiel gemäß Fig. 3 gezeigt, ermöglicht keine Bewegung der (gesamten) Arbeitsmaschine 1 relativ zu einem Untergrund, insbesondere entlang eines Untergrunds.

Die Arbeitsmaschine 1 ist in keinem Ausführungsbeispiel in einem Bauwerk verbaut, d. h. nicht fest mit einem Bauwerk verbunden. Die Arbeitsmaschine 1 stellt sonach keinen, typischerweise untrennbar, mit einer Bauwerkskonstruktion verbundenen Bestandteil eines Bauwerks dar. Bei der Arbeitsmaschine 1 handelt es in keinem Ausführungsbeispiel um eine z. B. als Personen- oder Lastenaufzug, Fahrsteig oder Rolltreppe ausgebildete Beförderungseinrichtung zur Beförderung von Personen und/oder Lasten.

Anhand von Fig. 1 ist ersichtlich, dass die Arbeitsmaschine 1 eine Mehrzahl an Funktionskomponenten 3.1 - 3.n aufweist. Jede Funktionskomponente 3.1 - 3.n übernimmt in ihrem Betrieb bzw. im Betrieb der Arbeitsmaschine 1 eine bestimmte Funktion und weist somit eine bestimmte Funktionalität auf. Jede Funktionskomponente 3.1 - 3.n ist (beschädigungs- bzw. zerstörungsfrei) lösbarer oder unlösbarer Bestandteil der Arbeitsmaschine 1; mit anderen Worten ist jede Funktionskomponente 3.1 - 3.n unmittelbar oder mittelbar, d. h. unter Zwischenschaltung wenigstens einer weiteren Funktionskomponente 3.1 - 3.n, an einer arbeitsmaschinenseitigen Grundstruktur (nicht gesondert gezeigt) angebunden. Jede Funktionskomponente 3.1 - 3.n kann sonach grundsätzlich auch als Arbeitsmaschinenkomponente bezeichnet bzw. erachtet werden.

Bereits erwähntes Beispiel einer entsprechenden Funktionskomponente 3.1 - 3.n der Arbeitsmaschine 1 ist die bereits erwähnte Arbeitskrafterzeugungseinrichtung 4.

Unabhängig von ihrer konkreten Ausgestaltung weist eine Funktionskomponente 3.1 - 3.n der Arbeitsmaschine 1 wenigstens zwei unterschiedliche Betriebsmodi bzw. allgemein Modi auf, in welchen diese betrieben werden kann. Wenigstens eine Funktionskomponente 3.1 - 3.n der Arbeitsmaschine 1 ist sonach in wenigstens zwei unterschiedlichen Betriebsmodi betreibbar.

Der Betrieb der Funktionskomponente 3.1 - 3.n kann in einem ersten Betriebsmodus (erster Modus) eingeschränkt oder (vollständig) gesperrt sein. Ist der Betrieb der Funktionskomponente 3.1 - 3.n in dem ersten Betriebsmodus eingeschränkt, ist dem Betrieb der Funktionskomponente 3.1 - 3.n ein wenigstens einen ersten Betriebsparameter umfassender erster Betriebsparametersatz zugrunde gelegt; die Funktionskomponente 3.1 - 3.n kann in diesem ersten Betriebsmodus grundsätzlich in Betrieb genommen werden. Der Betrieb der Funktionskomponente 3.1 - 3.n auf Grundlage des ersten Betriebsparametersatzes ermöglicht sonach jedenfalls eine Inbetriebnahme und einen Betrieb der Funktionskomponente 3.1 - 3.n. In dem ersten Betriebsmodus ist der Funktions- bzw. Leistungsumfang der Funktionskomponente 3.1 - 3.n, welcher wiederum von der konkreten Ausgestaltung der Funktionskomponente 3.1 - 3.n abhängt, jedoch (im Vergleich zu wenigstens einem weiteren Betriebsmodus der Funktionskomponente 3.1 - 3.n) beschränkt. Der erste Betriebsmodus zeichnet sich sonach dadurch aus, dass der Funktions- bzw. Leistungsumfang der Funktionskomponente 3.1 - 3.n im Hinblick auf deren vollen Funktions- bzw. Leistungsumfang wenigstens beschränkt ist. Der volle Funktions- bzw. Leistungsumfang der Funktionskomponente 3.1 - 3.n steht daher in dem ersten Betriebsmodus nicht zur Verfügung. Ist der Betrieb der Funktionskomponente 3.1 - 3.n in dem ersten Betriebsmodus (vollständig) gesperrt, kann die Funktionskomponente 3.1 - 3.n nicht in Betrieb genommen werden. Dies kann z. B. durch eine teilweise Abtrennung ("Standby") oder eine vollständige Abtrennung einen Funktionskomponente 3.1 - 3.n von einer dieser zugehörigen Energieversorgungseinrichtung realisiert sein.

Ist der Betrieb der Funktionskomponente 3.1 - 3.n in dem ersten Betriebsmodus gesperrt, kann der Betrieb der Funktionskomponente 3.1 - 3.n in einem zweiten bzw. weiteren Betriebsmodus (weiterer Modus) nicht (mehr) gesperrt sein; die Funktionskomponente 3.1 - 3.n kann also in dem weiteren Betriebsmodus in Betrieb genommen werden. Dem Betrieb der Funktionskomponente 3.1 - 3.n in diesem weiteren Betriebsmodus ist ein wenigstens einen (weiteren) Betriebsparameter umfassender (weiterer) Betriebsparametersatz zugrunde gelegt. Der Betrieb der Funktionskomponente 3.1 - 3.n auf Grundlage des (weiteren) Betriebsparametersatzes ermöglicht jedenfalls eine Inbetriebnahme und einen Betrieb der Funktionskomponente 3.1 - 3.n. In diesem weiteren Betriebsmodus kann der Funktions- bzw. Leistungsumfang der Funktionskomponente 3.1 - 3.n, welcher, wie erwähnt, von der konkreten Ausgestaltung der Funktionskomponente 3.1 - 3.n abhängt, beschränkt sein, d. h. die Funktionskomponente 3.1 - 3.n kann in diesem weiteren Betriebsmodus nicht mit ihrem vollen Funktions- bzw. Leistungsumfang betrieben werden. Denkbar ist es jedoch auch, dass der Funktions- bzw. Leistungsumfang der Funktionskomponente 3.1 - 3.n in diesem weiteren Betriebsmodus nicht beschränkt ist, d. h. die Funktionskomponente 3.1 - 3.n kann in diesem weiteren Betriebsmodus mit ihrem vollen Funktions- bzw. Leistungsumfang betrieben werden.

Ist der Betrieb der Funktionskomponente 3.1 - 3.n in dem ersten Betriebsmodus nicht gesperrt, d. h. ist dem Betrieb der Funktionskomponente 3.1 - 3.n in dem ersten Betriebsmodus ein wenigstens einen ersten Betriebsparameter umfassender erster Betriebsparametersatz zugrunde gelegt, ist dem Betrieb der Funktionskomponente 3.1 - 3.n in dem zweiten bzw. weiteren Betriebsmodus ein wenigstens einen von dem ersten Betriebsparameter unterschiedlichen weiteren Betriebsparameter umfassender weiterer Betriebsparametersatz zugrunde gelegt. In diesem weiteren Betriebsmodus ist der Funktions- bzw. Leistungsumfang der Funktionskomponente 3.1 - 3.n im Vergleich zu dem ersten Betriebsmodus weniger beschränkt oder - im Sinne einer vollständigen Aufhebung der Beschränkung des Funktions- bzw. Leistungsumfangs - nicht mehr beschränkt. Der weitere Betriebsmodus zeichnet sich sonach jedenfalls dadurch aus, dass der Funktions- bzw. Leistungsumfang der Funktionskomponente 3.1 - 3.n im Hinblick auf deren vollen Funktions- bzw. Leistungsumfang im Vergleich zu dem ersten Betriebsmodus weniger beschränkt und somit erweitert ist. Der weitere Betriebsmodus ermöglicht daher einen Betrieb der Funktionskomponente 3.1 - 3.n mit einem im Vergleich zu dem ersten Betriebsmodus erweiterten Funktions- und/oder Leistungsumfang.

Der in den jeweiligen Betriebsmodi betreibbaren Funktionskomponente 3.1 - 3.n ist eine arbeitsmaschinenseitige, gegebenenfalls zentrale, hardware- und/oder softwaremäßig implementierte Steuereinrichtung 6 zuordenbar bzw. zugeordnet. Die Steuereinrichtung 6 ist zur Bereitstellung und/oder Aktivierung des ersten oder des wenigstens einen weiteren Betriebsmodus und zur Steuerung des Betriebs der jeweiligen Funktionskomponente(n) 3.1 - 3.n auf Grundlage des jeweils bereitgestellten bzw. aktivierten Betriebsmodus eingerichtet. Zur Bereitstellung bzw. Aktivierung eines Betriebsmodus und zur Steuerung des Betriebs der Funktionskomponente 3.1 - 3.n auf Grundlage des jeweils aktivierten Betriebsmodus kann die Steuereinrichtung 6 geeignete Steuerinformationen erzeugen und, z. B. über eine arbeitsmaschinenseitige Kommunikationsstruktur 22, d. h. z. B. eine Bus- oder Netzwerkstruktur, an die jeweilige Funktionskomponente 3.1 - 3.n, d. h. insbesondere ein der jeweiligen Funktionskomponente 3.1 - 3.n zugehöriges Steuergerät (nicht gezeigt), übertragen.

Wesentlich an der Arbeitsmaschine 1 ist, dass die Steuereinrichtung 6 eingerichtet ist, den wenigstens einen weiteren Betriebsmodus der Funktionskomponente 3.1 - 3.n (nur) in Abhängigkeit des Vorliegens einer eine Freigabe zur Nutzung der Funktionskomponente 3.1 - 3.n in dem wenigstens einen weiteren Betriebsmodus beschreibenden Freigabeinformation bereitzustellen bzw. zu aktivieren und dem Betrieb der Funktionskomponente 3.1 - 3.n zugrunde zu legen. Mit anderen Worten ist die Steuereinrichtung 6 eingerichtet, den wenigstens einen weiteren Betriebsparametersatz dem Betrieb der Funktionskomponente 3.1 - 3.n in Abhängigkeit des Vorliegens einer entsprechenden Freigabeinformation und somit in Abhängigkeit eines durch die Freigabeinformation abgebildeten Freigabevorgangs zugrunde zu legen. Eine Freigabeinformation beschreibt, wie erwähnt, eine Freigabe zur Nutzung der Funktionskomponente 3.1 - 3.n in dem wenigstens einen weiteren Betriebsmodus.

Die Steuereinrichtung 6 ist sonach eingerichtet, dem Betrieb der Funktionskomponente 3.1 - 3.n den wenigstens einen weiteren Betriebsparametersatz in Abhängigkeit einer durch die Freigabeinformation beschriebenen Freigabe zugrunde zu legen. Es ist also möglich, in Abhängigkeit des Vorliegens einer entsprechenden Freigabeinformation bedarfsweise ("on demand") den Funktions- und Leistungsumfang der Funktionskomponente 3.1 - 3.n zu erweitern bzw. zu verändern.

Der Erzeugung einer Freigabeinformation kann wenigstens ein aktiver nutzerseitiger, d. h. nutzerseitig abgeschlossener bzw. vorgenommener, Freigabevorgang zugrunde liegen. Mithin kann eine Freigabeinformation abhängig eines aktiven nutzerseitigen Freigabevorgangs erzeugt werden. Die Erzeugung einer Freigabeinformation ist hier typischerweise an wenigstens eine aktive Handlung eines Nutzers geknüpft. Denkbar ist es jedoch auch, dass der Erzeugung einer Freigabeinformation kein aktiver nutzerseitiger Freigabevorgang zugrunde liegt. Mithin kann eine Freigabeinformation auch unabhängig eines aktiven nutzerseitigen Freigabevorgangs erzeugt werden. Die Erzeugung einer Freigabeinformation ist hier typischerweise nicht an eine aktive Handlung eines Nutzers geknüpft.

Ein Freigabevorgang kann auf verschiedene Weise vorgenommen werden.

Für den Fall des Erfordernisses einer aktiven Handlung eines Nutzers zur Erzeugung einer Freigabeinformation kann ein Nutzer kann den Freigabevorgang etwa an einem für eine Freigabe nutzerseitig, insbesondere durch eine aktive Betätigungshandlung, d. h. insbesondere ein Bewegen, zu betätigenden Freigabeelement (nicht gezeigt) einer der Steuereinrichtung 6 zugeordneten Freigabeeinrichtung 7 vornehmen. Ein entsprechendes, gegebenenfalls in wenigstens einem Bewegungsfreiheitsgrad relativ zu einer Grundstellung bewegbar gelagertes, Freigabeelement bzw. eine entsprechende Freigabeeinrichtung 7 kann außerhalb oder innerhalb der Arbeitsmaschine 1, d. h. insbesondere außerhalb oder innerhalb einer der Arbeitsmaschine 1 zugehörigen offenen oder geschlossenen Kabine 8, d. h. z. B. einer Führerkabine einer als Baggereinrichtung ausgebildeten Arbeitsmaschine 1 (vgl. Fig. 2) für einen Nutzer der Arbeitsmaschine 1, vorgesehen sein.

Denkbar ist es jedoch auch, dass Freigabevorgänge über geeignet konfigurierte Software erfolgen können. Mithin kann eine Freigabeeinrichtung 7 (rein) softwaremäßig implementiert sein. Eine entsprechende Freigabeeinrichtung 7 kann softwaremäßig implementiert z. B., gegebenenfalls als eigenes Nutzersubmenü, in eine der Steuereinrichtung 6 zuordenbare bzw. zugeordnete Nutzerschnittstelleneinrichtung 9, wie z. B. eine Multimediaeinrichtung, integriert sein. Eine entsprechende Freigabeeinrichtung 7 kann alternativ oder ergänzend z. B. auch als Programm ("App") in einem nutzerseitigen (portablen) Endgerät 10, z. B. einem Notebook, einem Tablet, einem Handy, einem Smartphone, einer Smartbrille, etc. implementiert sein, welches mit der Steuereinrichtung 6 kommuniziert. Ebenso kann eine entsprechende Freigabeeinrichtung 7 als Netzwerkanwendung, z. B. in einer Internetseite, implementiert sein, welches mit der Steuereinrichtung 6 kommuniziert.

Für den Fall des Erfordernisses keiner aktiven Handlung eines Nutzers zur Erzeugung einer Freigabeinformation kann die Erzeugung einer Freigabeinformation auf Grundlage, insbesondere automatisierbar bzw. automatisch, erfasster Nutzereigenschaften bzw. eines bestimmten Nutzer- bzw. Nutzungsverhaltens erfolgen. Eine Freigabeinformation kann insofern bestimmte Nutzereigenschaften und/oder ein bestimmtes Nutzer- bzw. Nutzungsverhalten berücksichtigen bzw. auf Grundlage bestimmter Nutzereigenschaften und/oder eines bestimmten Nutzer- bzw. Nutzungsverhaltens erzeugt werden. Nutzereigenschaften und/oder ein bestimmtes Nutzer- bzw. Nutzungsverhalten können über wenigstens eine geeignete der Steuereinrichtung 6 zuordenbare oder zugeordnete Eingabe- oder Erfassungseinrichtung 11 erfasst werden. Ein entsprechendes Nutzer- bzw. Nutzungsverhalten kann durch ein weiter unten näher erläutertes Nutzerkriterium abgebildet werden.

Eine entsprechende Eingabe- oder Erfassungseinrichtung 11 kann - analog der Freigabeeinrichtung 7 - beispielsweise, z. B. in Form einer akustischen, optischen, oder haptischen Erfassungssensorik - außerhalb oder innerhalb der Arbeitsmaschine 1 implementiert sein. Ebenso ist es möglich, dass eine entsprechende Eingabe- oder Erfassungseinrichtung 11 in einem nutzerseitigen (portablen) Endgerät 10, d. h. z. B. einem Notebook, einem Tablet, einem Handy einem Smartphone, einer Smartbrille, etc., implementiert sein, welches mit der Steuereinrichtung 6 kommuniziert, implementiert ist. Ebenso kann eine entsprechende Eingabe- oder Erfassungseinrichtung 11 als Netzwerkanwendung, z. B. in einer Internetseite, implementiert sein, welche mit der Steuereinrichtung 6 kommuniziert.

Die Arbeitsmaschine 1 schafft eine praktikable Möglichkeit, bestimmte Funktionalitäten der Arbeitsmaschine 1 bedarfs- und/oder zeitweise freizuschalten, sodass die Arbeitsmaschine bedarfs- und/oder zeitweise in unterschiedlichen Betriebsmodi betreibbar ist. Die Arbeitsmaschine 1 stellt sonach eine praktikable Lösung dar, bestimmte Funktionalitäten einer Arbeitsmaschine 1 bedarfs- und/oder zeitweise freizuschalten, sodass die Arbeitsmaschine 1 bedarfs- und/oder zeitweise in unterschiedlichen Betriebsmodi betreibbar ist.

Nachfolgend werden Beispiele entsprechender Funktionskomponenten 3.1 - 3.n der Arbeitsmaschine 1 gegeben. Eine Arbeitsmaschine 1 kann mit einzelnen, mehreren oder sämtlichen der nachfolgend beispielhaft aufgezählten Funktionskomponenten 3.1 - 3.n ausgestattet sein.

Eine Funktionskomponente 3.1 kann ein einen Bestandteil einer zur Erzeugung einer auf ein Arbeitselement 5 wirkenden Arbeitskraft eingerichteten arbeitsmaschinenseitigen Arbeitskrafterzeugungseinrichtung 4 bildendes Antriebsaggregat sein oder ein solches umfassen. Ein entsprechendes Antriebsaggregat kann z. B. ein elektrischer oder hydraulischer oder sonstiger motorischer Antrieb bzw. eine entsprechende Energiequelle sein. Ein Antriebsaggregat kann sonach wenigstens einen Antriebsmotor umfassen. Ein Betriebsparameter kann jedweder den Betrieb, insbesondere die Leistung und/oder den Energieverbrauch, des Antriebsaggregats beeinflussender Parameter sein. Beispielsweise kann das Antriebsaggregat in dem ersten Betriebsmodus mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren weiteren Energieverbrauch betrieben werden. Konkret kann dies z. B. bedeuten, dass eine Bewegung eines Arbeitselements 5 entlang eines Arbeitswegs in dem weiteren Betriebsmodus, d. h. z. B. aufgrund einer im Vergleich höheren zweiten Leistung(saufnahme) des Antriebsaggregats, schneller erfolgen kann als in dem ersten Betriebsmodus. Der Betrieb eines Antriebsaggregats mit unterschiedlichen Leistungsaufnahmen bzw. Energieverbräuchen in den jeweiligen Betriebsmodi kann z. B. durch gezielte Veränderung des Arbeitspunkts bzw. der Kennlinie des Antriebsaggregats realisiert werden.

Bei dem Arbeitselement 5 kann es sich bei dem Ausführungsbeispiel gemäß Fig. 2 beispielsweise um die Schaufel, bei dem Ausführungsbeispiel gemäß Fig. 3 beispielsweise um den Hammer, bei dem Ausführungsbeispiel gemäß Fig. 4 beispielsweise um eine Rühreinheit, bei dem Ausführungsbeispiel gemäß Fig. 5 beispielsweise um einen Rotor, bei dem Ausführungsbeispiel gemäß Fig. 6 beispielsweise um einen Bohrer und bei dem Ausführungsbeispiel gemäß Fig. 7 beispielsweise um eine Schweißelektrode handeln.

Eine Funktionskomponente 3.2 kann auch ein einen Bestandteil einer arbeitsmaschinenseitigen zur Erzeugung einer einen der Arbeitsmaschine zugehörigen Fahrzeugaufbau in eine Bewegung relativ zu einem Untergrund, insbesondere entlang eines Untergrunds, versetzenden Antriebskraft eingerichteten Antriebskrafterzeugungseinrichtung 12 (Fig. 2) bildendes Antriebsaggregat sein oder ein solches umfassen. Ein entsprechendes Antriebsaggregat kann z. B. ein elektrischer oder hydraulischer oder sonstiger motorischer Antrieb sein. Ein Antriebsaggregat kann sonach wenigstens einen Antriebsmotor umfassen. Ein Betriebsparameter kann jedweder den Betrieb, insbesondere die Leistung und/oder den Energieverbrauch, des Antriebsaggregats beeinflussender Parameter sein. Beispielsweise kann das Antriebsaggregat in dem ersten Betriebsmodus mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren weiteren Energieverbrauch betrieben werden. Konkret kann dies z. B. bedeuten, dass eine Bewegung der (gesamten) Arbeitsmaschine entlang eines Untergrunds in dem weiteren Betriebsmodus, d. h. z. B. aufgrund einer im Vergleich höheren zweiten Leistung(saufnahme) des Antriebsaggregats, schneller erfolgen kann als in dem ersten Betriebsmodus. Der Betrieb eines Antriebsaggregats mit unterschiedlichen Leistungsaufnahmen bzw. Energieverbräuchen in den jeweiligen Betriebsmodi kann z. B. durch gezielte Veränderung des Arbeitspunkts bzw. der Kennlinie des Antriebsaggregats realisiert werden.

Eine Funktionskomponente 3.3 kann auch eine Steuereinrichtung zur Steuerung der Bewegung wenigstens eines Arbeitselements 4 entlang wenigstens eines Arbeitswegs, insbesondere zur Steuerung von Unterbrechungen einer Arbeitsbewegung des Arbeitselements 4, insbesondere durch wenigstens einen Zwischenhalt, zwischen einem nutzerseitig vorgebbaren oder vorgegebenen Arbeitsweganfangspunkt und einem nutzerseitig vorgebbaren oder vorgegebenen Arbeitswegendpunkt, sein oder eine solche umfassen. Die Steuereinrichtung 6 kann eingerichtet sein, eine Bewegung des Arbeitselements 4 entlang eines durch einen nutzerseitig vorgebbaren oder vorgegebenen Arbeitsweganfangspunkt und einen nutzerseitig vorgebbaren oder vorgegebenen Arbeitswegendpunkt nutzerseitig vorgebbaren oder vorgegebenen Arbeitsweg in dem ersten Betriebsmodus mit einer ersten Anzahl an Unterbrechungen zu steuern und eine Bewegung des Arbeitselements 4 entlang des Arbeitswegs in einem zweiten Betriebsmodus mit einer anderen, d. h. insbesondere geringeren, Anzahl an Unterbrechungen zu steuern. Für einen beispielhaften Arbeitsweg zwischen einer ersten Arbeitsposition und einer zweiten Arbeitsposition, z. B. relativ zu einem zu bearbeitenden Werkstück 13 (Fig. 6, 7), kann das Arbeitselement 5 in dem weiteren Betriebsmodus sonach ohne die Möglichkeit eines Zwischenhalts zwischen der ersten und der zweiten Arbeitsposition werden. Selbstverständlich kann ein Arbeitselement 5 in dem weiteren Betriebsmodus auch ohne Unterbrechungen entlang eines durch einen nutzerseitig vorgebbaren oder vorgegebenen Arbeitsweganfangspunkt und einen nutzerseitig vorgebbaren oder vorgegebenen Arbeitswegendpunkt nutzerseitig vorgebbaren oder vorgegebenen Arbeitsweg bewegt werden.

Eine Funktionskomponente 3.4 kann auch eine zur Sicherung wenigstens eines vermittels der Arbeitsmaschine 1 zu bearbeitenden Objekts 2 relativ zu wenigstens einem arbeitsmaschinenseitigen Arbeitselement 5, insbesondere an wenigstens einem arbeitsmaschinenseitigen Arbeitselement 5, eingerichtete Sicherungseinrichtung 14 (Fig. 4), welche wenigstens ein zwischen einer Sicherungsposition und einer Nichtsicherungsposition bewegbares Sicherungselement (nicht gezeigt) umfasst, sein oder eine solche umfassen. Insbesondere kann die Funktionskomponente 3.4 eine einer entsprechenden Sicherungseinrichtung 14 zugehörige Steuereinrichtung (nicht gezeigt) zur Steuerung von Bewegungen des wenigstens einen Sicherungselements, insbesondere zwischen der Sicherungs- und der Nichtsicherungsposition, sein oder eine solche umfassen. Die Steuereinrichtung kann z. B. eingerichtet sein, dem Betrieb der Sicherungseinrichtung 14 in einem ersten Betriebsmodus einen ersten Betriebsparameter(satz) und in dem weiteren Betriebsmodus einen zweiten Betriebsparameter(satz) zugrunde zu legen. Über einen entsprechenden ersten und zweiten Betriebsparameter(satz) können diverse Betriebsparameter der Sicherungseinrichtung 14, d. h. z. B. die Bewegungsgeschwindigkeit des Sicherungselements, insbesondere zwischen der Sicherungs- und der Nichtsicherungsposition, die Nichtsicherungszeit des in die Nichtsicherungsposition bewegten Sicherungselements, bevor dieses in die Sicherungsposition bewegt wird, etc., gesteuert werden; mithin ist es z. B. möglich, dass das Sicherungselement in dem ersten Betriebsmodus mit einer ersten Bewegungsgeschwindigkeit und in dem weiteren Betriebsmodus mit einer zweiten, d. h. im Vergleich niedrigeren oder höheren, Bewegungsgeschwindigkeit bewegt wird und/oder das Sicherungselement in dem ersten Betriebsmodus eine erste Nichtsicherungszeit und in dem weiteren Betriebsmodus eine zweite, d. h. z. B. im Vergleich niedrigere, Nichtsicherungszeit, bevor es ausgehend von der Nichtsicherungsposition in die Sicherungsposition bewegt wird, aufweist.

Eine Funktionskomponente 3.5 kann auch eine einer Zugangsmöglichkeit bzw. - öffnung in eine arbeitsmaschinenseitige Kabine 8, d. h. z. B. eine Führerkabine (Fig. 2), zugeordnete Schließeinrichtung 15, welche wenigstens ein zwischen einer Offenstellung, in welcher ein Zutritt eines Nutzers in die oder aus der Kabine 8 durch die Zugangsmöglichkeit möglich ist, und einer Schließposition, in welcher kein Zutritt eines Nutzers in die oder aus der Kabine 8 durch die Zugangsmöglichkeit möglich ist, bewegbares, insbesondere türartiges- oder - förmiges, Schließelement (Kabinentür) umfasst, sein oder eine solche umfassen. Insbesondere kann die Funktionskomponente 3.5 eine einer entsprechenden Schließeinrichtung 15 zugehörige Steuereinrichtung (nicht gezeigt) zur Steuerung von Bewegungen des wenigstens einen Schließelements, insbesondere zwischen der Offen- und der Schließposition, sein oder eine solche umfassen. Die Steuereinrichtung kann z. B. eingerichtet sein, dem Betrieb der Schließeinrichtung 15 in einem ersten Betriebsmodus einen ersten Betriebsparameter(satz) und in dem weiteren Betriebsmodus einen zweiten Betriebsparameter(satz) zugrunde zu legen. Über einen entsprechenden ersten und zweiten Betriebsparameter(satz) können diverse Betriebsparameter der Schließeinrichtung 15, d. h. z. B. die Bewegungsgeschwindigkeit des Schließelements, insbesondere zwischen der Offen- und der Schließposition, die Öffnungszeit des in die Offenposition bewegten Schließelements, bevor dieses in die Schließposition bewegt wird, etc., gesteuert werden; mithin ist es z. B. möglich, dass das Schließelement in dem ersten Betriebsmodus mit einer ersten Bewegungsgeschwindigkeit und in dem weiteren Betriebsmodus mit einer zweiten, d. h. im Vergleich niedrigeren oder höheren, Bewegungsgeschwindigkeit bewegt wird und/oder das Schließelement in dem ersten Betriebsmodus eine erste Öffnungszeit und in dem weiteren Betriebsmodus eine zweite, d. h. im Vergleich niedrigere oder höhere Öffnungszeit, bevor es ausgehend von der Offenposition in die Schließposition bewegt wird, aufweist.

Eine Funktionskomponente 3.6 kann auch eine wenigstens einer Aussichtsmöglichkeit bzw. -öffnung, hierbei kann es sich z. B. um ein Sichtfenster handeln, aus einer arbeitsmaschinenseitigen Kabine 8, d. h. z. B. einer Führerkabine (Fig. 2), zugeordnete Schließeinrichtung 16, welche wenigstens ein zwischen einer Offenstellung, in welcher eine Aussicht aus der Kabine 8 durch die Aussichtsmöglichkeit möglich ist, und einer Schließposition, in welcher keine Aussicht aus der Kabine 8 durch die Aussichtsmöglichkeit möglich ist, bewegbares, insbesondere schieberartiges- oder -förmiges, Schließelement umfasst, sein oder eine solche umfassen. Insbesondere kann die Funktionskomponente 3.6 eine einer entsprechenden Schließeinrichtung 16 zugehörige Steuereinrichtung (nicht gezeigt) zur Steuerung von Bewegungen des wenigstens einen Schließelements, insbesondere zwischen der Offen- und der Schließposition, sein oder eine solche umfassen. Die Steuereinrichtung kann z. B. eingerichtet sein, in dem ersten Betriebsmodus keine Bewegung des Schließelements von der Schließ- in die Offenposition zu ermöglichen - hierunter kann gegebenenfalls auch eine begrenzte Bewegung des Schließelements in Richtung der Offenposition zu verstehen sein, welche noch keine vollständige Aussicht aus der Kabine 8 durch die Aussichtsmöglichkeit bzw. -öffnung zulässt - zu ermöglichen und in dem weiteren Betriebsmodus eine Bewegung des Schließelements von der Schließ- in die Offenposition, welche eine vollständige Aussicht aus der Kabine 8 durch die Aussichtsmöglichkeit bzw. -öffnung zulässt - zu ermöglichen. Auch ist es möglich, dass eine entsprechende Steuereinrichtung eingerichtet ist, dem Betrieb der Schließeinrichtung 16 in einem ersten Betriebsmodus einen ersten Betriebsparameter(satz) und in dem weiteren Betriebsmodus einen zweiten Betriebsparameter(satz) zugrunde zu legen. Über einen entsprechenden ersten und zweiten Betriebsparameter(satz) können diverse Betriebsparameter der Schließeinrichtung 16, d. h. z. B. die Bewegungsgeschwindigkeit eines Schließelements, insbesondere zwischen der Offen- und der Schließposition, die Öffnungszeit des in die Offenposition bewegten Schließelements, bevor dieses in die Schließposition bewegt wird, etc., gesteuert werden; mithin ist es z. B. möglich, dass ein Schließelement in dem ersten Betriebsmodus mit einer ersten Bewegungsgeschwindigkeit und in dem weiteren Betriebsmodus mit einer zweiten, d. h. im Vergleich niedrigeren oder höheren, Bewegungsgeschwindigkeit bewegt wird und/oder ein Schließelement in dem ersten Betriebsmodus eine erste Öffnungszeit und in dem weiteren Betriebsmodus eine zweite, d. h. im Vergleich z. B. höhere Öffnungszeit, bevor es ausgehend von der Offenposition in die Schließposition bewegt wird, aufweist.

Eine Funktionskomponente 3.7 kann auch eine zur Ausgabe von Signalen, insbesondere in wenigstens einen Bestandteil einer arbeitsmaschinenseitigen Kabine 8 (Fig. 2), d. h. z. B. einer Führerkabine, eingerichtete Signalausgabeeinrichtung 17, gegebenenfalls als Bestandteil einer arbeitsmaschinenseitigen Multimediaeinrichtung, sein oder eine solche umfassen. Eine entsprechende Signalausgabeeinrichtung kann z. B. eine Audio- und/oder Videoanlage sein. Ein Betriebsparameter kann jedweder den Betrieb, insbesondere den Funktions- und/oder Leistungsumfang, der Signalausgabeeinrichtung 17 beeinflussender Parameter sein. Beispielsweise kann die Signalausgabeeinrichtung 17 in dem ersten Betriebsmodus, sofern die Signalausgabeeinrichtung 17 in diesem überhaupt in Betrieb genommen werden kann, zur Ausgabe von Signalen einer ersten Qualität und/oder zum Empfang von analog empfangbaren Radio- und/oder TV-Sendern und in dem weiteren Betriebsmodus z. B. zur Ausgabe von Signalen einer im Vergleich höheren zweiten Qualität und/oder zum Empfang von digital empfangbaren Radio- und/oder TV-Sendern eingerichtet sein.

Eine Funktionskomponente 3.8 kann auch eine zur Steuerung der klimatischen Verhältnisse in wenigstens einem Bestandteil einer arbeitsmaschinenseitigen Kabine 8 (Fig. 2), d. h. z. B. einer Führerkabine, eingerichtete Klimaeinrichtung 18 sein oder eine solche umfassen. Eine entsprechende Klimaeinrichtung 18 kann z. B. eine Klimatisierungs- oder eine Heizungseinrichtung sein. Ein Betriebsparameter kann jedweder den Betrieb, insbesondere den Funktions- und/oder Leistungsumfang, der Klimaeinrichtung 18 beeinflussender Parameter sein. Beispielsweise kann die Klimaeinrichtung 18 in dem ersten Betriebsmodus, sofern die Klimaeinrichtung 18 in diesem überhaupt in Betrieb genommen werden kann, mit einer ersten Leistung(saufnahme) und/oder einem ersten Energieverbrauch und in dem weiteren Betriebsmodus mit einer im Vergleich höheren zweiten Leistung(saufnahme) und/oder einem im Vergleich geringeren zweiten Energieverbrauch betrieben werden. Der Betrieb der Klimaeinrichtung 18 mit den unterschiedlichen Leistung(saufnahm)en bzw. Energieverbräuchen in den jeweiligen Betriebsmodi kann z. B. durch gezielte Veränderung des Arbeitspunkts bzw. der Kennlinie der Klimaeinrichtung 18 realisiert werden.

Eine Funktionskomponente 3.9 kann auch eine zur, insbesondere funkbasierten, Kommunikation mit einem Kommunikationspartner eingerichtete arbeitsmaschinenseitige Kommunikationseinrichtung 19 sein oder eine solche umfassen. Eine entsprechende Kommunikationseinrichtung kann z. B. ein eine Funkverbindung, z. B. eine Bluetooth- oder WLAN-Verbindung, mit einem Kommunikationspartner, d. h. z. B. einem portablen Endgerät, insbesondere einem Tablet-PC, einem Handy, einem Smartphone, einer Smartbrille, etc., ermöglichendes Kommunikationsmodul sein. Ein entsprechendes Kommunikationsmodul kann im Weiteren - z. B. in Form eines Netzwerk-Hubs - eingerichtet sein, eine Kommunikationsverbindung mit einem Kommunikationsnetzwerk, d. h. z. B. einem Intranet oder dem Internet, herzustellen. Ein Betriebsparameter kann jedweder den Betrieb, insbesondere den Funktions- und/oder Leistungsumfang, der Kommunikationseinrichtung 19 beeinflussender Parameter sein. Beispielsweise kann die Kommunikationseinrichtung 19 in dem ersten Betriebsmodus, sofern die Kommunikationseinrichtung 19 in diesem überhaupt in Betrieb genommen werden kann, mit einer ersten Leistung (Funkleistung) bzw. einem ersten Sende- und Empfangsbereich und/oder einem ersten Funkstandard, z. B. einem Bluetooth-Standard, und in dem weiteren Betriebsmodus mit einer im Vergleich höheren Leistung bzw. einem im Vergleich größeren Sende- und Empfangsbereich und/oder einem bestimmten, gegebenenfalls zusätzlichen, Funkstandard, z. B. einem Bluetooth- oder WLAN-Standard, betrieben werden.

Eine Funktionskomponente 3.10 kann auch eine zur Bereitstellung einer bestimmten Anzahl und/oder Anordnung von Sitzplätzen innerhalb wenigstens eines Teils einer arbeitsmaschinenseitigen Kabine 8 (Fig. 2), d. h. z. B. einer Führerkabine, eingerichtete Sitzplatzeinrichtung 20 sein oder eine solche umfassen. Eine solche Sitzplatzeinrichtung 20 kann z. B. eine Sitzbewegungseinrichtung, welche zur Bewegung wenigstens eines Sitzes zwischen einer Nutzstellung, in welcher der Sitz von einem Nutzer als Sitz genutzt werden kann, und einer Verstaustellung, in welcher der Sitz verstaut ist und von einem Nutzer nicht als Sitz genutzt werden kann, sein. Ein Betriebsparameter kann jedweder den Betrieb, insbesondere den Funktions- und/oder Leistungsumfang, der Sitzplatzeinrichtung 20 beeinflussender Parameter sein. Beispielsweise kann die Sitzplatzeinrichtung 20 in dem ersten Betriebsmodus gesperrt sein, d. h. die Bewegung eines Sitzes im Allgemeinen zwischen einer Nutz- und einer Verstaustellung, im Besonderen ausgehend von einer Verstaustellung in eine Nutzstellung, ist nicht möglich, und in dem weiteren Betriebsmodus nicht gesperrt sein, d. h. die Bewegung eines Sitzes zwischen einer Nutz- und einer Verstaustellung ist möglich.

Für alle Ausführungsbeispiele gilt, dass die Steuereinrichtung 6 eingerichtet sein kann, den Betrieb der Funktionskomponente 3.1 - 3.n auf Grundlage des wenigstens einen weiteren Betriebsmodus nach dessen Bereitstellung in Abhängigkeit des Vorliegens einer wenigstens eine nutzerseitige Aktivierung des bereitgestellten weiteren Betriebsmodus beschreibenden Aktivierungsinformation zu steuern. Der wenigstens eine weitere Betriebsmodus einer jeweiligen Funktionskomponente 3.1 - 3.n kann sonach zunächst (nur) grundsätzlich bereitgestellt werden. Die tatsächliche Aktivierung bzw. Nutzung des erweiterten Funktions- bzw. Leistungsumfangs der jeweiligen Funktionskomponente 3.1 - 3.n kann sonach an eine durch eine entsprechende Aktivierungsinformation beschriebene nutzerseitige Aktivierung geknüpft sein. Eine nutzerseitige Aktivierung kann z. B. durch wenigstens eine nutzerseitige Aktivierungshandlung, wie z. B. die nutzerseitige Betätigung eines, z. B. arbeitsmaschinenseitigen, Aktivierungselements (nicht gezeigt) und/oder die nutzerseitige Gabe eines Aktivierungsbefehls, d. h. z. B. eines Sprachbefehls, erfolgen. Eine entsprechende nutzerseitige Aktivierungshandlung kann auch über ein nutzerseitiges (portables) Endgerät 10 gegeben und über eine geeignete, insbesondere drahtlose, Kommunikationsverbindung an die Steuereinrichtung 6 kommuniziert werden.

Für alle Ausführungsbeispiele gilt weiter, dass mehrere weitere Betriebsmodi bzw. Modi vorgesehen sein können. In diesem Fall kann ein erster weiterer Betriebsmodus (zweiter Betriebsmodus) einen Betrieb der Funktionskomponente 3.1 - 3.n mit einem im Vergleich zu dem ersten Betriebsmodus erweiterten Funktions- und/oder Leistungsumfang der Funktionskomponente 3.1 - 3.n ermöglichen. Ein zweiter weiterer Betriebsmodus (dritter Betriebsmodus) kann einen Betrieb der Funktionskomponente 3.1 - 3.n mit einem im Vergleich zu dem diesem (unmittelbar) vorangehenden weiteren Betriebsmodus (zweiten Betriebsmodus) erweiterten Funktions- und/oder Leistungsumfang der Funktionskomponente 3.1 - 3.n ermöglichen. Dieses Prinzip kann beliebig fortgesetzt werden. Die Aktivierung eines jeweiligen weiteren Betriebsmodus ist typischerweise mit dem Vorliegen einer entsprechenden Freigabeinformation verknüpft.

Weiter gilt für alle Ausführungsbeispiele, dass die Steuereinrichtung 6 eingerichtet sein kann, die Freigabeinformation in Abhängigkeit des Vorliegens wenigstens eines Freigabekriteriums zu erzeugen. Die Erzeugung der Freigabeinformation kann sonach an das Vorliegen eines oder mehrerer Freigabekriteriums geknüpft sein. Dabei ist es möglich, dass wenigstens zwei bestimmte Freigabekriterien vorliegen müssen, um eine Freigabeinformation zu erzeugen.

Im Weiteren werden in beispielhafter und damit nicht abschließender Weise Beispiele für entsprechende Freigabekriterien gegeben:
Ein Freigabekriterium kann ein Nutzerkriterium sein, welches wenigstens eine Nutzereigenschaft eines Nutzers der Arbeitsmaschine 1 beschreibt. Mithin kann eine Freigabeinformation z. B. nur erzeugt werden, wenn wenigstens ein Nutzerkriterium erfüllt oder - für das Beispiel des Konsums und/oder Missbrauchs von Rauschmitteln und/oder pharmazeutisch wirksamer Substanzen - nicht erfüllt ist. Ein entsprechendes Nutzerkriterium kann z. B. eine bestimmte Nutzereigenschaft, insbesondere das Alter, das Geschlecht, eine Betriebszugehörigkeit zu einem über die Arbeitsmaschine 1 verfügenden Betrieb, einen Dienstgrad innerhalb eines über die Arbeitsmaschine 1 verfügenden Betriebs, nutzerseitige Erfahrungen im Zusammenhang mit dem Betrieb der Arbeitsmaschine 1 bzw. der in dem wenigstens einen weiteren Betriebsmodus zu betreibenden Funktionskomponente 3.1 - 3.n, einen nutzerseitigen Konsum und/oder Missbrauch von Rauschmitteln und/oder pharmazeutisch wirksamer Substanzen, insbesondere cytotoxischer und/oder neurotoxischer Substanzen, sein. Ein Nutzerkriterium kann auch ein Nutzerverhalten sein. Insbesondere kann ein Nutzerkriterium auch ein Nutzerverhalten sein, welches die Abnutzung und den Verschleiß der Arbeitsmaschine 1 bzw. wenigstens einer Funktionskomponente 3.1 - 3.n der Arbeitsmaschine 1 beeinflusst bzw. betrifft. Entsprechende Nutzerkriterien können über geeignete Eingabe- oder Erfassungseinrichtungen 13 abgefragt bzw. erfassten. Entsprechende Eingabe- oder Erfassungseinrichtungen 13 können mit geeigneten hardware- und/oder softwaremäßigen Auswerteeinrichtungen (nicht gezeigt) zusammenwirken, welche eine Auswertung der eingegebenen und/oder erfassten Nutzereigenschaften im Hinblick auf ein Auswertungskriterium, d. h. z. B. im Hinblick auf ein Plausibilitätskriterium, ermöglichen.

Ein Freigabekriterium kann auch ein Bezahlkriterium sein, welches wenigstens einen Bezahlparameter zur Nutzung des wenigstens einen weiteren Betriebsmodus beschreibt. Mithin kann eine Freigabeinformation z. B. nur erzeugt werden, wenn wenigstens ein Bezahlkriterium erfüllt ist. Ein entsprechendes Bezahlkriterium kann z. B. ein nutzerseitig erfolgter Bezahlvorgang zur Nutzung des wenigstens einen weiteren Betriebsmodus sein. Ein entsprechender Bezahlvorgang kann über eine arbeitsmaschinenseitige Bezahleinrichtung 21 zur Durchführung entsprechender Bezahlvorgänge unmittelbar an der Arbeitsmaschine 1 oder über externe Bezahleinrichtungen zur Durchführung entsprechender Bezahlvorgänge, welche mit der Steuereinrichtung 6 kommunizieren, erfolgen.

Ein Freigabekriterium kann auch ein Objektkriterium sein, welches wenigstens ein vermittels der Arbeitsmaschine 1 zu bearbeitendes Objekt 2 beschreibt. Mithin kann eine Freigabeinformation z. B. nur erzeugt werden, wenn wenigstens ein Objektkriterium erfüllt oder - für das Beispiel eines Objekts 2 mit z. B. zu großem Gewicht und/oder zu großen Abmessungen - nicht erfüllt ist. Das Objektkriterium kann eine bestimmte chemische und/oder physikalische und/oder geometrische Eigenschaft wenigstens eines vermittels der Arbeitsmaschine 1 zu bearbeitenden Objekts 2 sein. Ein Objektkriterium kann sonach einen chemischen Parameter, wie z. B. die chemische Zusammensetzung, einen physikalischen Parameter, wie z. B. die Dichte, die Maße, die Temperatur, etc. und/oder einen geometrischen Parameter, wie z. B. die Abmessungen, die Form, etc., eines vermittels der Arbeitsmaschine 1 zu bearbeitenden Objekts 2 betreffen. Beispielsweise kann ein Überschreiten einer bestimmten Abmessung, insbesondere außerhalb eines vordefinierten Abmessungsbereichs, eine Aufhebung der Freigabe des weiteren Betriebsmodus bedingen.

Ein Freigabekriterium kann auch ein Bewegungskriterium sein, welches die Bewegung wenigstens einer bewegbaren Funktionskomponente 3.1 - 3.n, d. h. z. B. eines Arbeitselements 5, insbesondere eines Werkzeugelements, der Arbeitsmaschine 1 in wenigstens einem Bewegungsfreiheitsgrad beschreibt. Mithin kann eine Freigabeinformation z. B. nur erzeugt werden, wenn wenigstens ein Bewegungskriterium erfüllt oder - für das Beispiel einer auf eine unsachgemäße Nutzung einer arbeitsmaschinenseitigen Arbeitselements 5 zurückzuführenden Bewegung des Arbeitselements 5 - nicht erfüllt ist. Das Bewegungskriterium kann eine bestimmte Bewegung eines arbeitsmaschinenseitigen Arbeitselements 5 in einem bestimmten Bewegungsfreiheitsgrad und/oder entlang einer bestimmten Bewegungsbahn relativ zu einem Untergrund sein. Ein Bewegungskriterium kann sonach eine Bewegung eines arbeitsmaschinenseitigen Arbeitselements 5 in einem bestimmten Bewegungsfreiheitsgrad und/oder entlang einer bestimmten Bewegungsbahn relativ zu einem Untergrund betreffen. Dies kann insbesondere für das Ausführungsbeispiel einer als Baggereinrichtung ausgebildeten Arbeitsmaschine 1 gelten, deren Schaufel typischerweise um eine vertikale Schwenkachse schwenkbar gelagert ist. Beispielsweise kann eine bestimmte Bewegung einer entsprechenden Schaufel, insbesondere außerhalb eines vordefinierten Bewegungsbereichs, keine Freigabe oder eine Aufhebung der Freigabe des weiteren Betriebsmodus bedingen.

Ein Freigabekriterium kann auch ein Arbeitsvorganganzahlkriterium sein, welches eine Anzahl an Arbeitsvorgängen im Zusammenhang mit dem Bearbeiten wenigstens eines vermittels der Arbeitsmaschine 1 zu bearbeitenden Objekts 2, insbesondere innerhalb eines bestimmten Zeitraums, beschreibt. Mithin kann eine Freigabeinformation z. B. nur erzeugt werden, wenn wenigstens ein Arbeitsvorganganzahlkriterium erfüllt oder - für das Beispiel einer zu hohen (geplanten) Anzahl an Arbeitsvorgängen, insbesondere innerhalb eines bestimmten Zeitraums - nicht erfüllt ist. Das Arbeitsvorganganzahlkriterium kann eine bestimmte Anzahl an vermittels der Arbeitsmaschine 1, insbesondere in einem bestimmten Zeitraum, durchzuführenden oder durchgeführten Arbeitsvorgängen sein. Ein Arbeitsvorganganzahlkriterium kann sonach eine Anzahl an in einem bestimmten Zeitraum durchzuführenden oder durchgeführten Arbeitsvorgängen betreffen. Beispielsweise kann eine Überschreitung einer bestimmten Anzahl an Arbeitsvorgängen keine Freigabe oder eine Aufhebung der Freigabe des Weiteren Betriebsmodus bedingen.

Ein Freigabekriterium kann auch ein Arbeitskraftkriterium sein, welches eine Arbeitskraft zum Bearbeiten wenigstens eines vermittels der Arbeitsmaschine 1 zu bearbeitenden Objekts 2 beschreibt. Mithin kann eine Freigabeinformation z. B. nur erzeugt werden, wenn wenigstens ein Arbeitskraftkriterium erfüllt oder - für das Beispiel einer zu hohen erforderlichen Arbeitskraft - nicht erfüllt ist. Das Arbeitskraftkriterium kann eine bestimmte zum Bearbeiten wenigstens eines vermittels der Arbeitsmaschine 1 zu bearbeitenden Objekts 2 aufzubringende bzw. aufgebrachte Arbeitskraft sein. Eine Arbeitskraftkriterium kann sonach eine zum Bearbeiten wenigstens eines vermittels der Arbeitsmaschine 1 zu bearbeitenden Objekts 2 aufzubringende bzw. aufgebrachte Arbeitskraft betreffen. Beispielsweise kann sonach das Überschreiten einer bestimmten Arbeitskraft keine Freigabe oder eine Aufhebung der Freigabe des Weiteren Betriebsmodus bedingen.

Ein Freigabekriterium kann auch ein Arbeitswegkriterium sein, welches einen bestimmten Arbeitsweg wenigstens einer bewegbaren Funktionskomponente 3.1 - 3.n, d. h. z. B. eines Arbeitselements 5, insbesondere eines Werkzeugelements, der Arbeitsmaschine 1 im Zusammenhang mit dem Bearbeiten wenigstens eines vermittels der Arbeitsmaschine 1 zu bearbeitenden Objekts 2 beschreibt. Mithin kann eine Freigabeinformation z. B. nur erzeugt werden, wenn wenigstens ein Arbeitswegkriterium erfüllt oder - für das Beispiel eines zu langen (geplanten) Arbeitswegs - nicht erfüllt ist. Das Arbeitswegkriterium kann eine bestimmte, insbesondere von einem bestimmten Arbeitsweganfangspunkt und einem bestimmten Arbeitswegendpunkt unabhängige oder abhängige, Arbeitsweglänge sein. Das Arbeitswegkriterium kann sonach eine bestimmte, insbesondere von einem bestimmten Arbeitsweganfangspunkt (hierbei muss es sich nicht zwingend um einen absoluten Anfangspunkt handeln) und einem bestimmten Arbeitswegendpunkt (hierbei muss es sich nicht zwingend um einen absoluten Arbeitswegendpunkt handeln) unabhängige, Arbeitsweglänge, d. h. z. B. je nach Ausführung der Arbeitsmaschine 1 eine Arbeitsweglänge von 10 cm, betreffen. Ein Arbeitswegkriterium kann jedoch auch eine bestimmte, insbesondere von einem bestimmten Arbeitsweganfangspunkt und einem bestimmten Arbeitswegendpunkt abhängige, Arbeitsweglänge zwischen einem, insbesondere nutzerseitig, vorgebbaren bzw. vorgegebenen Arbeitsweganfangspunkt und einem, insbesondere nutzerseitig, vorgebbaren bzw. vorgegebenen Arbeitswegendpunkt, wie z. B. für das Ausführungsbeispiel einer als Bohreinrichtung eingesetzten Arbeitsmaschine 1 ein (bestimmter) Arbeitsweg zwischen einem bestimmten Bohranfangspunkt zu einem bestimmten Bohrendpunkt sein. Beispielsweise kann sonach das Über- oder Unterschreiten eines bestimmten Arbeitswegs keine Freigabe oder eine Aufhebung der Freigabe des Weiteren Betriebsmodus bedingen.

Ein Freigabekriterium kann auch ein Ortskriterium sein, welches wenigstens einen Ortsparameter, insbesondere einen Ort und/oder ein Gebiet um einen Ort, beschreibt, innerhalb welches der Betrieb der Arbeitsmaschine 1 auf Grundlage des wenigstens einen weiteren Betriebsmodus gestattet ist. Mithin kann eine Freigabeinformation z. B. nur erzeugt werden, wenn wenigstens ein Ortskriterium erfüllt oder-für das Beispiel eines Verlassens eines bestimmten Orts bzw. Gebiets - nicht erfüllt ist. Das Ortskriterium kann ein bestimmter Ort und/oder ein bestimmtes Gebiet um einen bestimmten Ort sein. Ein Ort bzw. Gebiet kann ein(e) bestimmte(s) Fläche(nareal) außerhalb und/oder innerhalb eines oder mehrerer, gegebenenfalls zusammengehörender, Gebäudeteile bzw. eines oder mehrerer, gegebenenfalls zusammengehörender, Gebäude sein. Ein Ortskriterium kann sonach einen bestimmten, gegebenenfalls nutzerseitig vorgebbaren bzw. vorgegebenen, Ort bzw. ein bestimmtes Gebiet, innerhalb welches die Arbeitsmaschine 1 in dem ersten und/oder zweiten Betriebsmodus betreibbare ist, betreffen. Beispielsweise kann sonach das Verlassen eines bestimmten Orts bzw. Gebiets keine Freigabe oder eine Aufhebung der Freigabe des Weiteren Betriebsmodus bedingen.

Ein Freigabekriterium kann auch ein Zeitkriterium sein, welches wenigstens einen Zeitparameter, insbesondere ein Zeitintervall und/oder wenigstens einen Zeitraum, beschreibt, innerhalb welches der Betrieb der Arbeitsmaschine 1 auf Grundlage des wenigstens einen weiteren Betriebsmodus gestattet ist. Mithin kann eine Freigabeinformation z. B. nur erzeugt werden, wenn wenigstens ein Zeitkriterium erfüllt oder - für das Beispiel einer (geplanten) Nutzung des wenigstens einen weiteren Betriebsmodus zu einer unüblichen Zeit (Nacht, Wochenende, etc.) - nicht erfüllt ist. Das Zeitkriterium kann eine bestimmte, insbesondere von einer Uhrzeit und/oder einem Datum unabhängige, Zeitdauer, d. h. z. B. eine Zeitdauer von 15 Minuten, 1 Stunde, 2 Tage, 3 Monate, 1 Jahr, etc. sein. Ein Zeitkriterium kann jedoch auch ein bestimmter, insbesondere von einer Uhrzeit und/oder einem Datum abhängiger, Zeitraum zwischen einem, insbesondere nutzerseitig, vorgebbaren bzw. vorgegebenen Anfangszeitpunkt und einem, insbesondere nutzerseitig, vorgebbaren bzw. vorgegebenen Endzeitpunkt, d. h. z. B. ein bestimmter Zeitraum innerhalb eines Tages, wie z. B. ein Zeitraum zwischen 8 und 12 Uhr, ein Zeitraum eines oder mehrerer Tage, insbesondere innerhalb einer (bestimmten) Woche, wie z. B. ein Zeitraum von Montag bis Donnerstag oder von Freitag oder Samstag bis Sonntag (Wochenende), ein Zeitraum eines oder mehrerer Monate, insbesondere innerhalb einer (bestimmten) Jahreszeit, wie z. B. ein Zeitraum von April bis Oktober, oder ein Zeitraum eines oder mehrerer Jahre, wie z. B. ein Zeitraum von 2017 bis 2018, sein. Beispielsweise kann sonach das Ablaufen einer bestimmten Zeitdauer oder das Erreichen eines bestimmten Zeitraums keine Freigabe oder eine Aufhebung der Freigabe des Weiteren Betriebsmodus bedingen.

Ein Freigabekriterium kann auch ein Klimakriterium sein, welches wenigstens einen Klimaparameter, insbesondere eine Temperatur, eine Luftfeuchtigkeit, einen Niederschlag, beschreibt, innerhalb welches der Betrieb der Arbeitsmaschine 1 auf Grundlage des wenigstens einen weiteren Betriebsmodus gestattet ist. Mithin kann eine Freigabeinformation z. B. nur erzeugt werden, wenn wenigstens ein Klimakriterium erfüllt oder - für das Beispiel einer (geplanten) Nutzung des wenigstens einen weiteren Betriebsmodus bei zu starkem Niederschlag (Regen, Schnee, etc.) - nicht erfüllt ist. Das Klimakriterium kann ein das Klima außerhalb und/oder innerhalb einer arbeitsmaschinenseitigen Kabine, soweit vorhanden, betreffender Klimaparameter, insbesondere eine Feuchtigkeit, ein Druck, eine Temperatur, außerhalb und/oder innerhalb der arbeitsmaschinenseitigen Kabine sein. Das Über- oder Unterschreiten z. B. einer bestimmten Temperatur kann sonach eine Aufhebung des Weiteren Betriebsmodus bedingen. Beispielsweise kann sonach ein Unterschreiten einer bestimmten Grenztemperatur keine Freigabe oder eine Aufhebung einer Freigabe des Weiteren Betriebsmodus bedingen.

Ein Freigabekriterium kann auch ein Sicherheitskriterium sein, welches wenigstens einen Sicherheitsparameter beschreibt, innerhalb welches der Betrieb der Arbeitsmaschine 1 auf Grundlage des wenigstens einen weiteren Betriebsmodus gestattet ist. Mithin kann eine Freigabeinformation z. B. nur erzeugt werden, wenn wenigstens ein Sicherheitskriterium erfüllt oder-für das Beispiel einer den Nutzer und/oder einen Dritten gefährdenden (geplanten) Nutzung des wenigstens einen weiteren Betriebsmodus - nicht erfüllt ist. Das Sicherheitskriterium kann ein, insbesondere für einen Nutzer der Arbeitsmaschine 1 und/oder einen Dritten, sicherheitsrelevanter Vorgang im Zusammenhang mit Betrieb der Arbeitsmaschine 1 sein. Ein sicherheitsrelevanter, d. h. insbesondere sicherheitsbedenklicher, Vorgang im Zusammenhang mit dem Betrieb der Arbeitsmaschine 1 kann sonach keine Freigabe oder eine Aufhebung der Freigabe des Weiteren Betriebsmodus bedingen.

Jeweilige Kriterien können, insbesondere in Abhängigkeit des Vorliegens einer eine Änderung des jeweiligen Kriteriums autorisierenden Autorisierungsinformation, in Abhängigkeit einer autorisierten Bedienereingabe variabel sein bzw. variiert werden. Ein hierfür speziell autorisierter Bediener, d. h. z. B. der Inhaber der Arbeitsmaschine 1, ein Ausbilder, etc., kann sonach gezielt Einfluss auf die durch das jeweilige Kriterium mitbestimmte Freigabe des Betriebs einer Funktionskomponente 3.1 - 3.n in dem weiteren Betriebsmodus nehmen.

Die Steuereinrichtung 6 kann in allen Ausführungsbeispielen dazu eingerichtet sein, eine Empfehlung einer Freigabe eines weiteren Betriebsmodus im Hinblick auf eine bestimmte Zielgröße beschreibenden Empfehlungsinformation zu erzeugen und, insbesondere über wenigstens eine arbeitsmaschinenseitige Signalausgabeeinrichtung 17 z. B. in Form akustischer, optischer und/oder haptischer Signale, an einen Nutzer auszugeben. Eine Zielgröße kann z. B. eine möglichst effiziente Bewegung eines Arbeitselements 5 zwischen einem, insbesondere nutzerseitig vorgebbaren oder vorgegebenen, Arbeitsweganfangspunkt und einem, insbesondere nutzerseitig vorgebbaren oder vorgegebenen, Arbeitswegendpunkt sein, welche z. B. einen Zwischenhalt an zwischen dem Arbeitsweganfangspunkt und dem Arbeitswegendpunkt liegenden Positionen unterbindet. Für einen beispielhaften Arbeitsweg zwischen einer ersten Arbeitsposition und einer zweiten Arbeitsposition kann eine Empfehlungsinformation sonach z. B. als Empfehlung angeben, einen weiteren Betriebsmodus freizugeben, um Zwischenhalte zwischen der ersten und der zweiten Arbeitsposition unterbinden. Denkbar ist es beispielsweise auch, dass eine Empfehlungsinformation als Empfehlung angibt, einen weiteren Betriebsmodus freizugeben, um einen bestimmten Arbeitsvorgang mit einer höheren Geschwindigkeit und/oder Leistung durchzuführen.

Mit den in den in Fig. gezeigten Ausführungsbeispielen einer Arbeitsmaschine 1 lässt sich ein Verfahren zum Betrieb einer wie beschriebenen Arbeitsmaschine 1 implementieren Die verfahrensgemäß betriebene Arbeitsmaschine 1 umfasst wenigstens eine Funktionskomponente 3.1 - 3.n, welche einen ersten Betriebsmodus, in welchem der Betrieb der Funktionskomponente 3.1 - 3.n gesperrt ist oder dem Betrieb der Funktionskomponente 3.1 - 3.n ein wenigstens einen ersten Betriebsparameter umfassender erster Betriebsparametersatz zugrunde gelegt wird, und wenigstens einen weiteren Betriebsmodus, in welchem der Betrieb der Funktionskomponente 3.1 - 3.n nicht gesperrt ist oder dem Betrieb der Funktionskomponente 3.1 - 3.n ein wenigstens einen von dem ersten Betriebsparameter unterschiedlichen weiteren Betriebsparameter umfassender weiterer Betriebsparametersatz zugrunde gelegt wird, aufweist. Der ist eine Steuereinrichtung 6, welche zur Aktivierung des ersten oder des wenigstens einen weiteren Betriebsmodus und zur Steuerung des Betriebs Funktionskomponente 3.1 - 3.n auf Grundlage des jeweils aktivierten Betriebsmodus eingerichtet ist, zuordenbar oder zugeordnet. Das Verfahren zeichnet sich dadurch aus, dass die Steuereinrichtung 6 den wenigstens einen weiteren Betriebsmodus in Abhängigkeit des Vorliegens einer wenigstens einen eine Bereitstellung und/oder Aktivierung des wenigstens einen weiteren Betriebsmodus beschreibenden Freigabeinformation bereitstellt und/oder aktiviert und der Steuerung des Betriebs der Funktionskomponente 3.1 - 3.n den wenigstens einen weiteren Betriebsparametersatz zugrunde legt.

## Patentansprüche

1. Arbeitsmaschine (1) zur Durchführung wenigstens eines Arbeitsvorgangs, umfassend:
wenigstens eine Funktionskomponente (3.1 - 3.n), welche einen ersten Betriebsmodus, in welchem der Betrieb der wenigstens einen Funktionskomponente (3.1 - 3.n) gesperrt ist oder dem Betrieb der wenigstens einen Funktionskomponente (3.1 - 3.n) ein wenigstens einen ersten Betriebsparameter umfassender erster Betriebsparametersatz zugrunde gelegt ist, und
wenigstens einen weiteren Betriebsmodus, in welchem der Betrieb der wenigstens einen Funktionskomponente (3.1 - 3.n) nicht gesperrt ist oder dem Betrieb der wenigstens einen Funktionskomponente (3.1 - 3.n) ein wenigstens einen von dem ersten Betriebsparameter unterschiedlichen weiteren Betriebsparameter umfassender weiterer Betriebsparametersatz zugrunde gelegt ist, aufweist,
wenigstens eine der wenigstens einen Funktionskomponente (3.1 - 3.n) zuordenbare oder zugeordnete Steuereinrichtung (6), welche eingerichtet ist, den ersten oder den wenigstens einen weiteren Betriebsmodus zu aktivieren und den Betrieb der wenigstens einen Funktionskomponente (3.1 - 3.n) auf Grundlage des jeweils aktivierten Betriebsmodus zu steuern, wobei die Steuereinrichtung (6) eingerichtet ist, den wenigstens einen weiteren Betriebsmodus in Abhängigkeit des Vorliegens einer eine Freigabe zur Nutzung der wenigstens einen Funktionskomponente (3.1 - 3.n) in dem wenigstens einen weiteren Betriebsmodus beschreibenden Freigabeinformation bereitzustellen und/oder zu aktivieren und der Steuerung des Betriebs der wenigstens einen Funktionskomponente (3.1 - 3.n) den wenigstens einen weiteren Betriebsparametersatz zugrunde zu legen.

2. Arbeitsmaschine nach Anspruch 1, **dadurch gekennzeichnet, dass** der wenigstens eine weitere Betriebsmodus einen Betrieb der Funktionskomponente (3.1 - 3.n) mit einem im Vergleich zu dem ersten Betriebsmodus erweiterten Funktions- und/oder Leistungsumfang der Funktionskomponente (3.1 - 3.n) ermöglicht.

3. Arbeitsmaschine nach Anspruch 1 oder 2, **gekennzeichnet durch** mehrere weitere Betriebsmodi, wobei ein erster weiterer Betriebsmodus einen Betrieb der Funktionskomponente (3.1 - 3.n) mit einem im Vergleich zu dem ersten Betriebsmodus erweiterten Funktions- und/oder Leistungsumfang der Funktionskomponente (3.1 - 3.n) ermöglicht und ein zweiter weiterer Betriebsmodus einen Betrieb der Funktionskomponente (3.1 - 3.n) mit einem im Vergleich zu dem diesem vorangehenden weiteren Betriebsmodus erweiterten Funktions- und/oder Leistungsumfang der Funktionskomponente (3.1 - 3.n) ermöglicht.

4. Arbeitsmaschine nach einem der vorhergehenden Ansprüche, **dadurch gekennzeichnet, dass** die wenigstens eine Steuereinrichtung (6) eingerichtet ist, die Freigabeinformation in Abhängigkeit des Vorliegens wenigstens eines Freigabekriteriums zu erzeugen.

5. Arbeitsmaschine nach Anspruch 4, **dadurch gekennzeichnet, dass** das Freigabekriterium
- ein Nutzerkriterium ist, welches wenigstens eine Nutzereigenschaft eines Nutzers der Arbeitsmaschine (1) beschreibt, und/oder
- ein Objektkriterium ist, welches wenigstens ein vermittels der Arbeitsmaschine (1) zu bearbeitendes Objekt (2) beschreibt, und/oder
- ein Bezahlkriterium ist, welches wenigstens einen Bezahlparameter zur Nutzung des wenigstens einen weiteren Betriebsmodus beschreibt,
- ein Bewegungskriterium ist, welches die Bewegung wenigstens einer bewegbaren Funktionskomponente (3.1 - 3.n) der Arbeitsmaschine (1) in wenigstens einem Bewegungsfreiheitsgrad beschreibt, und/oder
- ein Arbeitsvorganganzahlkriterium, welches eine Anzahl an Arbeitsvorgängen im Zusammenhang mit dem Bearbeiten wenigstens eines vermittels der Arbeitsmaschine (1) zu bearbeitenden Objekts (2), insbesondere innerhalb eines bestimmten Zeitraums, beschreibt, und/oder
- ein Arbeitskraftkriterium, welches eine Arbeitskraft zum Bearbeiten wenigstens eines vermittels der Arbeitsmaschine (1) zu bearbeitenden Objekts (2) beschreibt, und/oder
- ein Arbeitswegkriterium, welches einen bestimmten Arbeitsweg wenigstens einer bewegbaren Funktionskomponente der Arbeitsmaschine (1) im Zusammenhang mit dem Bearbeiten wenigstens eines vermittels der Arbeitsmaschine (1) zu bearbeitenden Objekts (2), beschreibt, und/oder
- ein Ortskriterium, welches wenigstens einen Ortsparameter, insbesondere einen Ort und/oder ein Gebiet um einen Ort, beschreibt, innerhalb welches der Betrieb der Arbeitsmaschine (1) auf Grundlage des wenigstens einen weiteren Betriebsmodus gestattet ist, und/oder
- ein Zeitkriterium, welches wenigstens einen Zeitparameter, insbesondere ein Zeitintervall und/oder wenigstens einen Zeitraum, beschreibt, innerhalb welches der Betrieb der Arbeitsmaschine (1) auf Grundlage des wenigstens einen weiteren Betriebsmodus gestattet ist, und/oder
- ein Klimakriterium, welches wenigstens einen Klimaparameter, insbesondere eine Temperatur, eine Luftfeuchtigkeit, einen Niederschlag, beschreibt, innerhalb welches der Betrieb der Arbeitsmaschine auf Grundlage des wenigstens einen weiteren Betriebsmodus gestattet ist, und/oder
- ein Sicherheitskriterium, welches wenigstens einen Sicherheitsparameter beschreibt, innerhalb welches der Betrieb der Arbeitsmaschine auf Grundlage des wenigstens einen weiteren Betriebsmodus gestattet ist.

6. Arbeitsmaschine nach Anspruch 5, **dadurch gekennzeichnet, dass**
- das oder ein Nutzerkriterium eine bestimmte Nutzereigenschaft, insbesondere das Alter, das Geschlecht, eine Betriebszugehörigkeit zu einem über die Arbeitsmaschine verfügenden Betrieb, einen Dienstgrad innerhalb eines über die Arbeitsmaschine (1) verfügenden Betriebs, nutzerseitige Erfahrungen im Zusammenhang mit dem Betrieb der Arbeitsmaschine (1) bzw. der wenigstens einen in dem wenigstens einen weiteren Betriebsmodus zu betreibenden Funktionskomponente (3.1 - 3.n), einen nutzerseitigen Konsum und/oder Missbrauch von Rauschmitteln und/oder pharmazeutisch wirksamer Substanzen, insbesondere cytotoxischer und/oder neurotoxischer Substanzen, ist,
- das oder ein Objektkriterium eine bestimmte chemische und/oder physikalische und/oder geometrische Eigenschaft wenigstens eines vermittels der Arbeitsmaschine (1) zu bearbeitenden Objekts (2) ist,
- das oder ein Bezahlkriterium ein nutzerseitig erfolgter Bezahlvorgang zur Nutzung des wenigstens einen weiteren Betriebsmodus ist,
- das oder ein Bewegungskriterium wenigstens eine bestimmte Bewegung wenigstens einer bewegbar gelagerten Funktionskomponente (3.1 - 3.n) der Arbeitsmaschine (1) in wenigstens einem bestimmten Bewegungsfreiheitsgrad, insbesondere einem translatorischen und/oder rotatorischen Bewegungsfreiheitsgrad, ist,
- das oder ein Arbeitsvorganganzahlkriterium eine bestimmte Anzahl an vermittels der Arbeitsmaschine (1), insbesondere in einem bestimmten Zeitraum, durchzuführenden oder durchgeführten Arbeitsvorgängen ist,
- das oder ein Arbeitskraftkriterium eine bestimmte zum Bearbeiten wenigstens eines vermittels der Arbeitsmaschine (1) zu bearbeitenden Objekts (2) vermittels einer arbeitsmaschinenseitigen Arbeitskrafterzeugungseinrichtung aufzubringende Arbeitskraft ist,
- das oder ein Arbeitswegkriterium eine bestimmte, insbesondere von einem bestimmten Arbeitsweganfangspunkt und einem bestimmten Arbeitswegendpunkt abhängige oder unabhängige, Arbeitsweglänge wenig einer Funktionskomponente (3.1 - 3.n) der Arbeitsmaschine (1) im Zusammenhang mit der Bearbeitung wenigstens eines Objekts (2) vermittels der Arbeitsmaschine (1) ist,
- das oder ein Ortskriterium ein bestimmter Ort und/oder ein bestimmtes Gebiet um einen bestimmten Ort ist,
- das oder ein Zeitkriterium eine bestimmte, insbesondere von einer Uhrzeit und/oder einem Datum unabhängige, Zeitdauer oder ein bestimmter, insbesondere von einer Uhrzeit und/oder einem Datum abhängiger, Zeitraum zwischen einem vorgebbaren oder vorgegebenen Anfangszeitpunkt und einem vorgebbaren oder vorgegebenen Endzeitpunkt ist,
- das oder ein Klimakriterium ein das Klima außerhalb und/oder innerhalb der Arbeitsmaschine (1) betreffender Klimaparameter, insbesondere eine Feuchtigkeit, ein Druck, eine Temperatur, außerhalb und/oder innerhalb der Arbeitsmaschine (1), ist,
- das oder ein Sicherheitskriterium ein, insbesondere für einen Nutzer der Arbeitsmaschine (1) und/oder einen Dritten, sicherheitsrelevanter Vorgang im Zusammenhang mit dem Betrieb der Arbeitsmaschine (1) durch einen Nutzer der Arbeitsmaschine (1) ist.

7. Arbeitsmaschine nach Anspruch 5 oder 6, **dadurch gekennzeichnet, dass** das Nutzerkriterium und/oder das Objektkriterium und/oder das Bezahlkriterium und/oder das Arbeitsvorganganzahlkriterium und/oder das Arbeitskraftkriterium und/oder das Arbeitswegkriterium und/oder das Ortskriterium und/oder das Zeitkriterium und/oder das Klimakriterium und/oder das Sicherheitskriterium, insbesondere in Abhängigkeit des Vorliegens einer eine Änderung des jeweiligen Kriteriums autorisierenden Autorisierungsinformation, variabel ist.

8. Arbeitsmaschine nach einem der vorhergehenden Ansprüche, **dadurch gekennzeichnet, dass**
- die Funktionskomponente (3.1) ein einen Bestandteil einer zur Erzeugung einer auf ein arbeitsmaschinenseitiges Arbeitselement wirkenden Arbeitskraft eingerichteten Arbeitskrafterzeugungseinrichtung (4) bildendes Antriebsaggregat ist oder ein solches umfasst, oder
- die Funktionskomponente (3.2) ein einen Bestandteil einer zur Erzeugung einer einen der Arbeitsmaschine (1) zugehörigen Fahrzeugaufbau in eine Bewegung relativ zu einem Untergrund, insbesondere entlang eines Untergrunds, versetzenden Antriebskraft eingerichteten arbeitsmaschinenseitigen Antriebskrafterzeugungseinrichtung bildendes Antriebsaggregat ist oder ein solches umfasst,
- die Funktionskomponente (3.3) eine Steuereinrichtung zur Steuerung der Bewegung wenigstens eines arbeitsmaschinenseitigen Arbeitselements (5) entlang wenigstens eines Arbeitswegs, insbesondere zur Steuerung von Unterbrechungen einer Arbeitsbewegung des arbeitsmaschinenseitigen Arbeitselements (5) zwischen einem nutzerseitig vorgebbaren oder vorgegebenen Arbeitsweganfangspunkt und einem nutzerseitig vorgebbaren oder vorgegebenen Arbeitswegendpunkt, ist oder eine solche umfasst, oder
- die Funktionskomponente (3.4) eine Sicherungseinrichtung zur Sicherung wenigstens eines vermittels der Arbeitsmaschine zu bearbeitenden Objekts (2) an wenigstens einem arbeitsmaschinenseitigen Arbeitselement, welche wenigstens ein zwischen einer Sicherungs- und einer Nichtsicherungsposition bewegbares, insbesondere halterungsartiges-oder -förmiges, Sicherungselement umfasst, ist oder eine solche umfasst, oder
- die Funktionskomponente (3.5) eine wenigstens einer Zugangsmöglichkeit bzw. -öffnung in eine oder aus einer arbeitsmaschinenseitigen Kabine (8) zugeordnete Schließeinrichtung, welche wenigstens ein zwischen einer Offenstellung, in welcher ein Zugang in die bzw. aus der Kabine (8) durch die Zugangsmöglichkeit möglich ist, und einer Schließposition, in welcher keine kein Zugang in die bzw. aus der Kabine (8) durch die Zugangsmöglichkeit möglich ist, bewegbares, insbesondere schieberartiges- oder -förmiges, Schließelement umfasst, ist oder eine solche umfasst, oder
- die Funktionskomponente (3.6) eine wenigstens einer Aussichtsmöglichkeit bzw. -öffnung aus einer arbeitsmaschinenseitigen Kabine zugeordnete Schließeinrichtung, welche wenigstens ein zwischen einer Offenstellung, in welcher eine Aussicht aus der Kabine durch die Aussichtsmöglichkeit möglich ist, und einer Schließposition, in welcher keine Aussicht aus der Kabine durch die Aussichtsmöglichkeit möglich ist, bewegbares, insbesondere schieberartiges- oder -förmiges, Schließelement umfasst, ist oder eine solche umfasst,
- die Funktionskomponente (3.7) eine zur Ausgabe von Signalen eingerichtete Signalausgabeeinrichtung ist oder eine solche umfasst, oder
- die Funktionskomponente (3.8) eine zur Steuerung der klimatischen Verhältnisse in wenigstens einem Teil einer Arbeitsmaschine (1), insbesondere einem Gehäuse der Arbeitsmaschine (1) eingerichtete Klimaeinrichtung ist oder eine solche umfasst, oder
- die Funktionskomponente (3.9) eine zur, insbesondere funkbasierten, Kommunikation der Arbeitsmaschine mit einem Kommunikationspartner eingerichtete Kommunikationseinrichtung ist oder eine solche umfasst, oder
- die Funktionskomponente (3.10) eine zur Bereitstellung einer bestimmten Anzahl und/oder Anordnung von Sitzplätzen innerhalb wenigstens eines Teils einer arbeitsmaschinenseitigen Kabine, z. B. einer Führerkabine, eingerichtete Sitzplatzeinrichtung ist oder eine solche umfasst.

9. Arbeitsmaschine nach einem der vorhergehenden Ansprüche, **dadurch gekennzeichnet, dass** die Steuereinrichtung (6) eingerichtet ist, den Betrieb der wenigstens einen Funktionskomponente (3.1 - 3.n) auf Grundlage des wenigstens einen weiteren Betriebsmodus nach dessen Freigabe in Abhängigkeit des Vorliegens wenigstens einer durch wenigstens eine nutzerseitige Aktivierungshandlung erteilten Aktivierung zu steuern.

10. Arbeitsmaschine nach einem der vorhergehenden Ansprüche, **dadurch gekennzeichnet, dass** die Steuereinrichtung (6) dazu eingerichtet ist, eine Empfehlung einer Freigabe eines weiteren Betriebsmodus im Hinblick auf eine bestimmte, insbesondere den Betrieb der Arbeitsmaschine (1) beeinflussende, Zielgröße beschreibenden Empfehlungsinformation zu erzeugen und an einen Nutzer auszugeben.

11. Arbeitsmaschine nach einem der vorhergehenden Ansprüche, **dadurch gekennzeichnet, dass** sie als Baumaschineneinrichtung, insbesondere als Erdbau- oder Bodenbearbeitungseinrichtung, oder als Materialbearbeitungseinrichtung, insbesondere als Werkzeugmaschineneinrichtung, oder als Materialverarbeitungseinrichtung ausgebildet ist.

12. Verfahren zum Betrieb einer Arbeitsmaschine (1) nach einem der vorhergehenden Ansprüche, wobei die Arbeitsmaschine (1) wenigstens eine Funktionskomponente (3.1 - 3.n), welche einen ersten Betriebsmodus, in welchem der Betrieb der Funktionskomponente (3.1 - 3.n) gesperrt ist oder dem Betrieb der Funktionskomponente (3.1 - 3.n) ein wenigstens einen ersten Betriebsparameter umfassender erster Betriebsparametersatz zugrunde gelegt wird, und wenigstens einen weiteren Betriebsmodus, in welchem der Betrieb der Funktionskomponente (3.1 - 3.n) nicht gesperrt ist oder dem Betrieb der Funktionskomponente (3.1 - 3.n) ein wenigstens einen von dem ersten Betriebsparameter unterschiedlichen weiteren Betriebsparameter umfassender weiterer Betriebsparametersatz zugrunde gelegt wird, aufweist, und
eine der wenigstens einen Funktionskomponente (3.1 - 3.n) zuordenbare oder zugeordnete Steuereinrichtung (6), welche zur Bereitstellung und/oder Aktivierung des ersten oder des wenigstens einen weiteren Betriebsmodus und zur Steuerung des Betriebs der Funktionskomponente (3.1 - 3.n) auf Grundlage des jeweils bereitgestellten und/oder aktivierten Betriebsmodus eingerichtet ist, umfasst, **dadurch gekennzeichnet, dass** die Steuereinrichtung (6) den wenigstens einen weiteren Betriebsmodus in Abhängigkeit des Vorliegens einer wenigstens einen eine Bereitstellung und/oder Aktivierung des wenigstens einen weiteren Betriebsmodus beschreibenden Freigabeinformation bereitstellt und/oder aktiviert und der Steuerung des Betriebs der wenigstens einen Funktionskomponente (3.1 - 3.n) den wenigstens einen weiteren Betriebsparametersatz zugrunde legt.
